# EUROPEAN PATENT APPLICATION

(11) **EP 1 906 387 A1**
(43) Date of publication of application: **02.04.2008**
(21) Application number: 06781113.3
(22) Date of filing: 14.07.2006
(51) Int. Cl.: G10L 19/00, G10L 19/14, H04M 3/56

(54) **RELAY DEVICE, COMMUNICATION TERMINAL, SIGNAL DECODER, SIGNAL PROCESSING METHOD, AND SIGNAL PROCESSING PROGRAM**

(30) Priority: 19.07.2005 JP 2005208933
(71) Applicant: MATSUSHITA ELECTRIC INDUSTRIAL CO., LTD., Osaka 571-8501 (JP)
(72) Inventor: YAMANASHI, Tomofumi c/o Matsushita El. Ind. Co., Ltd., Chuo-ku, Osaka-shi, Osaka 540-6207 (JP); SATOH, Kaoru c/o Matsushita El. Ind. Co., Ltd., Chuo-ku, Osaka-shi, Osaka 540-6207 (JP); MORII, Toshiyuki c/o Matsushita El. Ind. Co., Ltd., Chuo-ku, Osaka-shi, Osaka 540-6207 (JP)
(74) Representative: Pautex Schneider, Nicole Véronique
(86) International application number: PCT/JP2006/314039
(87) International publication number: WO 2007/010844

(57) **Abstract**

It is an object of the present invention to provide a relay device, a communication terminal, a signal decoder, a method for processing a signal, and a program for processing a signal, which make it possible to achieve a multi-party communication system capable of preventing a significant deterioration of the quality of a sound obtained by decoding a speech/audio signal without increasing a cost for processing, as compared with the conventional communication terminals, the conventional communication techniques, and the like. The relay device comprises a receiver **11** for receiving information transmitted from a plurality of communication terminals participating in multi-party communications and encoded on a layer basis in a plurality of layers by scalable coding; a reconstruction processor **15** for generating control information used to combine, on a layer basis, the encoded information received by the receiver **11** from the plurality of communication terminals; and an integrator/transmitter **16** for integrating, on a layer basis, the encoded received by the receiver **11** from the plurality of communication terminals in accordance with the control information generated by the reconstruction processor **15.**

## Description

### Technical Field of the Invention

The present invention relates to a relay device, a communication terminal, a signal decoder, a method for processing a signal, and a program for processing a signal, which are used in a communication system for encoding and transmitting a signal.

### Background of the Invention

Conventionally, there have been known a wide variety of multi party communication systems each of which performs simultaneous communications between three or more parties, such as a multipoint conferencing system, and is widely used in recent years. Each of the communication systems, such as a digital communication system for performing communications through Integrated Services Digital Network (ISDN) or the like, performs communications between multiple parties by assigning a speech/audio signal transmitted from each of terminals to a unique channel on the basis of each of the terminals and by transmitting a signal to each of the terminals through a communication line.

Aside from the above-mentioned multi-party communication systems, another typical communication system has a function allowing communication devices such as an exchange, a communication server, and a telephone device to perform multi-party communications. Each of the communication devices such as an exchange decodes signals transmitted from multiple terminals to overlap the decoded signals. Each of the communication devices then re-encodes the signals to transmit each of the encoded signals to a specified terminal. The telephone device is designed to receive a signal transmitted from each of other terminals and decodes the received, overlap the received speech/audio signals, and encode the overlapped signal to transmit the encoded signal to the exchange, if the telephone device has a function for performing multi-party communications. The above mentioned communication technique for performing multi-party communications is described in, for example, Patent Document 1.

In recent years, scalable coding techniques have been developed, which are each capable of decoding a speech/audio signal or a music signal from part of encoded information and suppressing a deterioration of the quality of a sound even in the case where a packet is lost (for example, refer to Patent Document 2). The scalable coding technique disclosed in Patent Document 2 is designed to encode a speech/audio signal or a music signal in multiple layers in order to decode the audio signal or the music signal from part of encoded information. The scalable coding technique can suppress a deterioration of the quality of a sound even in the case where a packet is lost. Specifically, if the scalable coding technique is designed to encode an input signal firstly in a first layer, which is the lowest layer among multiple layers, the technique is to generate encoded information to be input to a first layer. The scalable coding technique is designed to then repeat a step of receiving a residual signal indicating a difference between a signal input to an (i - 1)th layer (i is an integer equal to or more than 2) and a decoded signal obtained by decoding encoded information input to the (i -1)th layer, and a step of encoding the residual signal to generate information to be input to an ith layer.
Patent Document 1: Japanese Patent Laid Open Publication No. 2004-222194
Patent Document 2: Japanese Patent Laid Open Publication No. 10-97295

### Disclosure of the Invention

### Problems to be resolved by the Invention

Such a conventional telephone device having a function for performing multi-party communications, however, is designed to decode received encoded information, overlap the decoded signal with a speech/audio signal, and re-encode the overlapped signal, which results in a large cost required for the calculation and in a deterioration of the quality of a sound obtained by decoding a speech/audio signal encoded a plurality of times. If the number of communication lines increases with increasing the number of communication terminals participating in multi-party communications, the communication cost would increase, and the usage rate of lines would also increase, causing a problem of operability of the system.

It is, therefore, an object of the present invention to provide a relay device, a communication terminal, a signal decoder, a method for processing a signal, and a program for processing a signal, which make it possible to achieve a multi-party communication system capable of preventing a significant deterioration of the quality of a sound obtained by decoding a speech/audio signal without increasing a cost for processing, as compared with the conventional communication terminals, the conventional communication techniques, and the like.

### Means for Solving the Problems

There is provided a relay device according to the present invention comprising: a receiver for receiving information transmitted from each of communication terminals participating in multi-party communications and encoded on a layer basis in a plurality of layers by scalable coding; a reconstruction processor for generating control information used to combine the encoded information received by the receiver from the communication terminals, on the basis of each of the plurality of layers; an integrator/transmitter for combining and integrating, in accordance with the control information generated by the reconstruction processor, the encoded information received by the receiver from the communication terminals, on the basis of each of the plurality layers, and transmitting the integrated encoded information.

The relay device thus constructed as described above according to the present invention reconstructs received encoded information to transmit the reconstructed information without decoding. This prevents an increase in cost for processing, compared with the conventional communication terminals, the conventional communication techniques and the like. The relay device according to the present invention makes it possible to achieve a multi-party communication system capable of preventing a significant deterioration of the quality of a sound obtained by decoding a speech/audio signal.

The reconstruction processor of the relay device according to the present invention may have a control parameter storage section for storing a control parameter including a transmission bit rate of a signal transmitted in the past. In this case, the transmission bit rate is in the state of being set for each of the communication terminals. The reconstruction processor of the relay device according to the present invention may generate control information used to combine the encoded information to be transmitted to the communication terminals in accordance with a control parameter stored in the control parameter storage section.

The relay device thus constructed as described above according to the present invention is capable of reducing a load of processing for detecting a transmission bit rate and generating control information, since the reconstruction processor is designed to generate control information used to combine encoded information to be transmitted to each of communication terminals in accordance with the control parameter including a transmission bit rate of a signal transmitted in the past.

The reconstruction processor of the relay device according to the present invention may set the control parameter stored in the control parameter storage section in accordance with the level of a speech/audio signal to be reproduced based on each of the encoded information transmitted from the communication terminals and with information on communication conditions including the statuses of communication lines for communications between the relay device and the communication terminals

The relay device thus constructed as described above according to the present invention makes it possible to achieve the configuration of layers leading to reproduction of a speech/audio signal to output a sound comfortable on the side of a listener, since the reconstruction processor is capable of setting the control parameter in accordance with the level of a speech/audio signal to be reproduced and with the information on communication conditions including the statuses of communication lines.

The reconstruction processor of the relay device according to the present invention may be designed to update the control parameter stored in the control parameter storage section when another communication terminal participates in the multi-party communications or when any one of the communication terminals participating in the multi-party communications cancels the participation of the multi-party communications.

The relay device thus constructed as described above according to the present invention is capable of reducing a load of processing for generating control information, since the reconstruction processor is designed to update the control parameter stored in the control parameter storage section.

The reconstruction processor of the relay device according to the present invention may be designed to select information encoded on the basis of each of a predetermined number of layers including a base layer from the encoded information received from the communication terminals in accordance with the control parameter stored in the control parameter storage section to combine the selected information.

The relay device thus constructed as described above according to the present invention is capable of reducing the load of processing for generating control information, since the reconstruction processor is designed to select the encoded information in accordance with the control parameter.

The relay device according to the present invention may comprise encoded information storage section for sequentially storing encoded information transmitted in the same time zone by any of the communication terminals and then storing encoded information transmitted in the next time zone by any of the communication terminals, in which every time the encoded information storage section receives the encoded information transmitted from two or more of the communication terminals participating in the multi-party communications in the same time zone, the encoded information storage section outputs, to the reconstruction processor, the encoded information sequentially stored in the encoded information storage section and not output yet to the reconstruction processor.

The relay device thus constructed as described above according to the present invention makes it possible to clarify the processing, since the encoded information storage section is designed to receive encoded information transmitted in the same time zone and then receive encoded information transmitted in the next time zone.

The relay device according to the present invention may be designed to connect any one of the communication terminals, with another communication terminal by use of a communication line other than a line used to perform the multi-party communications, and then to cause the other communication terminal to participate in the multi-party communications.

The relay device thus constructed as described above according to the present invention is designed to connect two communication terminals relating to the interrupt by use of a communication line other than the line used to perform the multi-party communications. The relay device according to the present invention is thus capable of performing processing relating to an interrupt without a suspension of the multi-party communications.

The relay device according to the present invention may be designed to connect any one of the communication terminals participating in the multi-party communications with another communication terminal by use of a communication line other than the line used to perform the multi-party communications to communicate the any one of the communication terminals participating terminal with the other communication terminal.

The relay device thus constructed as described above according to the present invention is designed to connect two communication terminals relating to the interrupt by use of a communication line other than the communication lines used to perform the multi-party communications. The relay device according to the present invention is thus capable of performing processing relating to an interrupt without a suspension of the multi-party communications.

The communication terminal according to the present invention may comprise: a receiver for receiving information encoded on the basis of each of a plurality of layers by scalable coding; a decoder for decoding a speech/audio signal by scalable coding in accordance with control information included in the encoded information received by the receiver; an encoder for encoding the speech/audio signal by scalable coding in accordance with the control information included in the encoded information received by the receiver; and a transmitter for transmitting the information obtained by encoding the speech/audio signal.

The relay device thus constructed as described above according to the present invention is designed to reconstruct received encoded information and transmit the reconstructed information without decoding. This prevents an increase in cost for processing, compared with the conventional communication terminals, communication techniques and the like. The relay device according to the present invention makes it possible to achieve a multi-party communication system capable of preventing a significant deterioration of the quality of a sound obtained by the decoding.

The signal decoder according to the present invention may comprise an encoded information separator for separating information encoded on the basis of each of a plurality of layers by scalable coding into encoded information of each layersource code and control information; and a decoder for decoding the encoded information on the basis of each of the plurality of layers and in accordance with the control information.

The signal decoder thus constructed as described above is capable of decoding encoded information on a layer basis in accordance with the control information, and decoding encoded information transmitted from a different communication terminal and integrated in a different layer.

The decoder of the signal decoder according to the present invention may be designed to decode the information encoded on the basis of each of a predetermined number of layers including a base layer.

The signal decoder thus constructed as described above according to the present invention is capable of accurately decoding information encoded on a layer basis from in the base layer even when the transmission bit rate is low.

There is provided a method for processing a signal, according to the present invention, comprising: a reception step of receiving, by a receiver, encoded information transmitted from plurality of communication terminals participating in multi-party communications and encoded on the basis of each of a plurality of layers by scalable coding; a reconstruction step of generating control information used to combine, on a layer basis, the encoded information received from the plurality of communication terminals in the reception step; an integration step of combining and integrating, on a layer basis, the information received from the plurality of communication terminals and encoded on the basis of each of the plurality of layers, by use of an integrator/transmitter; and a transmission step of transmitting the information encoded on the basis of each of the plurality of layers and integrated in the integration step, by use of the integrator/transmitter.

The relay device constructed using the abovementioned method according to the present invention is designed to reconstruct received encoded information to transmit the reconstructed information without decoding. This prevents an increase of a cost necessary for processing, compared with the conventional communication terminals, communication techniques and the like. The relay device according to the present invention may perform the above-described method for processing a signal to achieve a multi-party communication system capable of preventing a significant deterioration of the quality of a sound signal obtained by the decoding.

There is provided a program for processing a signal, according to the present invention, comprising: a reception step of receiving encoded information transmitted to a computer from a plurality of communication terminals participating in multi-party communications and encoded on the basis of each of a plurality of layers by scalable coding; a reconstruction step of generating control information used to combine, on a layer basis, the encoded information received from the plurality of communication terminals in the reception step; an integration step of combining and integrating, on a layer basis, the encoded information received from the plurality of communication terminals and encoded on the basis of the plurality of layers; and a transmission step of transmitting the encoded information integrated in the integration step.

The program for processing a signal according to the present invention, which is designed to execute the above-described steps, reconstructs received encoded information to transmit the reconstructed information without decoding. This prevents an increase in cost for processing, compared with the conventional communication terminals, communication techniques and the like. The relay device according to the present invention makes it possible to achieve a multi-party communication system capable of preventing a significant deterioration of the quality of a sound signal obtained by the decoding.

The present invention provides a relay device designed to reconstruct received encoded information to transmit the reconstructed information without decoding, a communication terminal, a signal decoder, a method for processing a signal, and a program for processing a signal. This prevents an increase in cost for processing, compared with the conventional communication terminals, communication techniques and the like. The relay device according to the present invention makes it possible to achieve a multi-party communication system capable of preventing a significant deterioration of the quality of a sound signal obtained by the decoding.

### Brief Description of the Drawings

Fig. **1** is a block diagram showing the configuration of a communication system including a relay device and communication terminals according to the first embodiment of the present invention.
Fig. **2** is a block diagram showing the configuration of the relay device according to the first embodiment of the present invention.
Fig. **3** is a block diagram showing the configuration of a first interrupt pattern processing unit according to the first embodiment of the present invention.
Fig. **4** is a block diagram showing the configuration of a second interrupt pattern processing unit according to the first embodiment of the present invention.
Fig. **5** is a block diagram showing the configuration of a third interrupt pattern processing unit according to the first embodiment of the present invention.
Fig. **6** is a flowchart showing operations of the relay device according to the first embodiment of the present invention.
Fig. **7** is a flowchart showing a first interrupt pattern process performed by the first interrupt pattern processing unit according to the first embodiment of the present invention.
Fig. **8** is a flowchart showing a second interrupt pattern process performed by the second interrupt pattern processing unit according to the first embodiment of the present invention.
Fig. **9** is a flowchart showing a third interrupt pattern process performed by the third interrupt pattern processing unit according to the first embodiment of the present invention.
Fig. **10** is a block diagram showing the configuration of a communication terminal according to a second embodiment of the present invention.
Fig. **11** is a block diagram showing the configuration of a decoder according to the second embodiment of the present invention.
Figs. **12(a)** to **12(d)** are diagrams each showing a data structure of encoded information to be transmitted from the communication terminal according to the second embodiment of the present invention.
Fig. **13** is a block diagram showing an inner configuration of a base layer encoder of an encoder according to the second embodiment of the present invention.
Fig. **14** is a block diagram showing an inner configuration of a base layer decoder of the encoder according to the second embodiment of the present invention.
Fig. **15** is a block diagram showing an inner configuration of a decoder provided in the communication terminal according to the second embodiment of the present invention.

### Description of Reference Numerals

**1A** to **1N:** Communication terminal
**2A** to **2N**: Transmission channel
**10:** Relay device
**11**: Receiver
**12**: Interrupt determination section
**13**: Encoded information separator
**14**: Encoded information managing section (encoded information storage section)
**15**: Reconstruction processor
**15a**: Control parameter storage section
**16**: Integrator/transmitter
**16**encoded information integrator
**16b**: Transmitter
**18a, 18b, 39a, 39b, 39c, 44, 134, 136, 138, 201, 202, 203, 222a, 222b, 224a, 224b, 226a, 226b**: Control switch
**19**: Communication processor
**20, 30, 40**: Interrupt pattern processing unit
**21,34,41**: Terminal number determination section
**22, 26, 27, 32, 36, 38, 43:** Pattern switching processor
**23,31:** Connection preparation section
**24,33**: Permission determination section

### Best Mode for Carrying Out the Invention

Embodiments of the present invention will be described below with reference to the accompanying drawings.

### (First Embodiment)

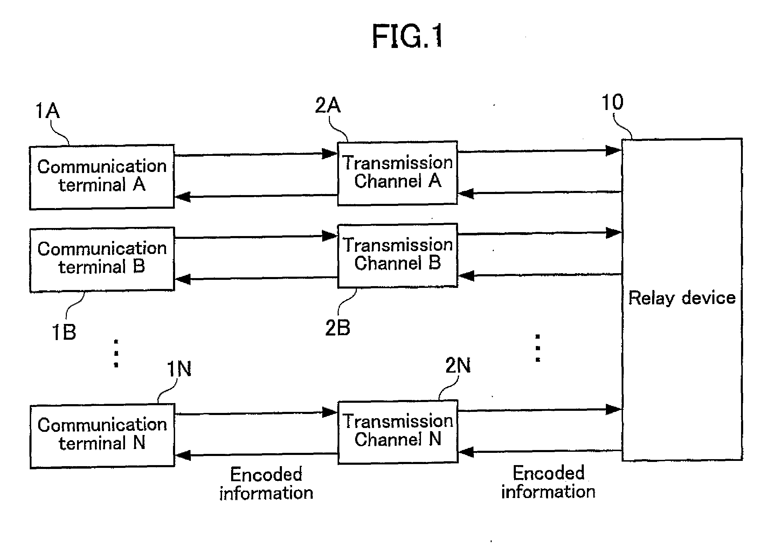

Fig. **1** is a block diagram showing the configuration of a communication system including a relay device and communication terminals according to the first embodiment of the present invention. The communication system shown in Fig. **1** includes a plurality of communication terminals **1A** to **1N** and the like capable of performing multi-party communications, a relay device **10,** a plurality of transmission channels for connecting the plurality of communication terminals **1A** to **1N** and the like with the relay device **10,** in which the plurality of communication terminals **1A** to **1N** can mutually perform multi-party communications through the relay device 10.

The relay device **10,** which has a function for enabling multi-party communications and is provided in the communication system, will be described. Communications between two terminals are similar to those in the conventional technique and are not described. Code-excited linear prediction (CELP) is used for hierarchical coding and decoding.

The layers are referred to as "a base layer", "a first enhancement layer", "a second enhancement layer", "a third enhancement layer" and the like in the order from the lowest layer. The layers other than the base layer are referred to as enhancement layers. The hierarchical encoding and decoding make it possible to ensure scalability, since data in all layers is transmitted when a bit rate expressing a communication rate is significantly achieved, and since data in the predetermined number of layers from the base layer, which are determined in accordance with the bit rate, is transmitted when a significant bit rate is not achieved.

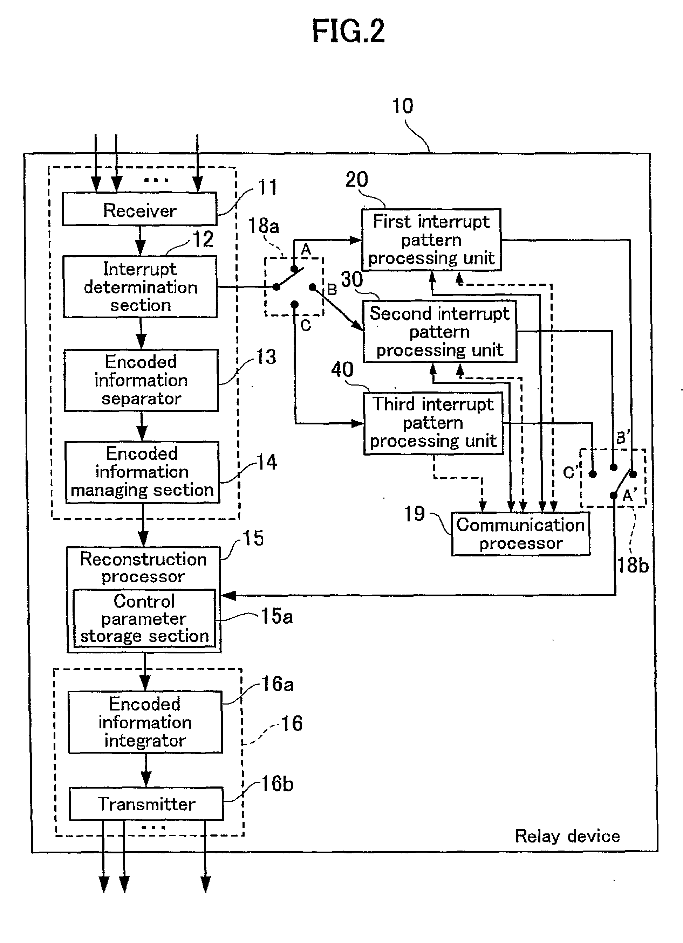

The Fig. **2** is a block diagram showing the configuration of the relay device **10** according to the first embodiment of the present invention. The relay device **10** has a receiver **11** for receiving a signal transmitted from each of the plurality of communication terminals **1A** to **1N** and the like; an interrupt determination section **12** for determining whether or not the received signal includes an interrupt signal; first, second and third interrupt pattern processing units **20, 30, 40** for executing interrupt processing in accordance with the interrupt signal; an encoded information separator **13** for sequentially separating predetermined information from encoded information (hereinafter referred to as received encoded information) included in the received signal; an encoded information managing section **14** for managing the information sequentially separated from the received signal by the encoded information separator **13;** a reconstruction processor **15** for reconstructing encoded information to be transmitted to the plurality of communication terminals **1A** to **1N** and the like; an encoded information integrator **16a** for integrating the reconstructed encoded information; a transmitter **16b** for transmitting the integrated encoded information to the plurality of communication terminals **1A** to **1N** and the like; control switches **18a** and **18b** for switching a connection in accordance with the interrupt signal; and a communication processor **19** for connecting and disconnecting a line. The encoded information integrator **16a** and the transmitter **16b** are collectively referred to as an "integrator/transmitter **16."** According to the first embodiment, the reconstruction processor **15** has a control parameter storage section **15a.** The control parameter storage section **15a** may be a storage region capable of maintaining, updating and deleting a control parameter, for example a non-volatile storage medium such as a hard disk and a flash memory.

The receiver **11** receives a signal transmitted from each of the plurality of communication terminals **1A** to **1N** and the like through a plurality of transmission channels **2A** to **2N** and outputs the received signal to the interrupt determination section **12.**

The interrupt determination section **12** receives the signal transmitted from the receiver **11** and determines whether or not the received signal includes an interrupt signal used to connect or disconnect any one of communication terminals and to increase or decrease the number of the communication terminals participating in multi-party communications. If the interrupt determination section **12** determines that the received signal includes the interrupt signal, the interrupt determination section **12** outputs the interrupt signal to the interrupt pattern processing unit **20, 30** or **40** in accordance with the pattern of the interrupt signal. If the interrupt determination section **12** determines that the received signal does not include the interrupt signal, the interrupt determination section **12** outputs the received signal to the encoded information separator **13.**

Hereinafter, the multi-party communications are performed between the communication terminals **1A** to **1N** unless stated otherwise. The interrupt signal has first, second and third patterns. The first pattern interrupt signal (hereinafter referred to as the first pattern interrupt signal) includes a participation request signal designed to be transmitted from any one of the communication terminals **1A** to **1N** when the any one of the communication terminals **1A** to **1N** causes a communication terminal **1Z** other than the communication terminals **1A** to **1N** to participate in the multi-party communications during the multi-party communications performed by the communication terminals **1A** to **1N**. The second pattern interrupt signal (hereinafter referred to as the second pattern interrupt signal) is a participation request signal designed to be transmitted from the communication terminal **1Z** other than the communication terminal **1A** to **1N** to request any one of the communication terminal **1A** to **1N** to communicate with the communication terminal **1Z** during the multi-party communications performed by the communication terminals **1A** to **1N.** In the present embodiment, the communication terminal **1A** is used as a terminal with which the communication terminal **1Z** requests to communicate, to facilitate understanding. The third pattern interrupt signal (hereinafter referred to as the third pattern interrupt signal) is a line disconnection request signal designed to be transmitted from any one of the communication terminals **1A** to **1N** participating in the multi-party communications when the any one of the communication terminals **1A** to **1N** requests to cancel the participation of the multi-party communications during the multi-party communications. In the present embodiment, the communication terminal **1N** is used as a terminal that requests to cancel the participation of the multi-party communications. If the interrupt determination section **12** determines that the received signal includes the first pattern interrupt signal, the interrupt determination section **12** operates to connect the control switches **18a** and **18b** to terminals **A** and **A'** respectively and to output the first pattern interrupt signal to the first interrupt pattern processing unit **20** as shown in Fig. **2****.**

The encoded information separator **13** receives the signal output from the interrupt determination section **12** and sequentially separates received encoded information included in the received signal into a component of encoded information (hereinafter referred to as a "encoded information component") and a component of control information (hereinafter referred to as a "control information component") to output the sequentially separated encoded information component and the sequentially separated control information component to the encoded information managing section **14.**

The encoded information is speech/audio information encoded, such as content of speech/audio data transmitted from the communication terminals **1A** to **1N.** The control information is information (hereinafter referred to as "terminal transmission mode information") on a transmission bit rate of a signal transmitted by each of the communication terminals **1A** to **1N,** information relating to the encoded information, error correction information, and error detection information.

The encoded information managing section **14** receives the encoded information component and the control information component, which are output from the encoded information separator **13.** The encoded information managing section **14** sequentially accumulates the encoded information component and the control information component transmitted in the same time zone from the communication terminals **1A** to **1N** participating in the multi-party communications to manage the encoded information component and the control information component. The encoded information managing section **14** outputs, to the reconstruction processor **15,** the encoded information and the control information which are sequentially accumulated, when the encoded information managing section **14** receives the encoded information components and the control information components which are obtained by separating encoded information transmitted from two or more of the plurality of communication terminals **1A** to **1N** in the same time zone. The encoded information managing section **14** constitutes an encoded information storage section in the present embodiment.

The reconstruction processor **15** receives the encoded information and the control information, which are output from the encoded information managing section **14** and transmitted in the same time zone, and an output (hereinafter referred to as an "interrupt processing output signal") from the interrupt pattern processing units **20, 30** and **40.** The reconstruction processor **15** reconstructs the encoded information and the control information, which are to be transmitted to the communication terminals **1A** to **1N** and the like, and outputs, to the encoded information integrator **16a,** information (encoded information and control information) obtained by reconstructing the encoded information and the control information. The control parameter is a predetermined parameter and is set in the relay device **10.** The control parameter includes a transmission bit rate of a signal to be transmitted to each of the communication terminals **1A** to **1N** and the like. In this case, the transmission bit rate is in the state of being set for each of the communication terminals **1A** to **1N.** The reconstruction processor **15** has the control parameter storage section **15a** for setting the control parameter in the present embodiment. The present invention, however, is not limited to the control parameter storage section **15a.** The control parameter storage section 15a may be provided in any section other than the reconstruction processor 15 in the relay device **10** as long as the control parameter storage section **15a** is a storage medium capable of maintaining, updating, and deleting the control parameter. The control parameter is updated in accordance with the interrupt processing output signal when the reconstruction processor **15** receives the interrupt processing output signal from each of the interrupt processing units **20, 30** and **40.**

The reconstruction processor **15** is designed to reconstruct the encoded information to be transmitted to each of the communication terminals **1A** to **1N** and the like in accordance with the control parameter. The process of the reconstruction performed by the reconstruction processor **15** will be described in detail below. The reconstruction processor **15** first refers to the control parameter set in the control parameter storage section **15a** provided in the reconstruction processor **15.** The reconstruction processor **15** then extracts encoded information corresponding to a necessary number of the layers from encoded information transmitted from the communication terminals **1A** to **1N.** However, when the transmission bit rate included in the control parameter and set for each of the communication terminals **1A** to **1N** is larger than a transmission bit rate indicated by the terminal transmission mode information included in the received encoded information, the reconstruction processor **15** extracts encoded information or encoded information corresponding to the number of the layers in accordance with the transmission bit rate of the received encoded information.

The present embodiment will be described taking an example in which the number of the layers is 4, and transmission bit rates are expressed by BR1, BR2, BR3 and BR4 in the order from the lowest transmission bit rate. When a transmission bit rate set for the communication terminal **1A** is BR2, and a transmission bit rate indicated by the terminal transmission mode information in the received encoded information received from the communication terminal **1A** is BR3, the reconstruction processor **15** selects and extracts the encoded information (hereinafter referred to as a "base layer encoded information") in the base layer and the encoded information (hereinafter referred to as a "first enhancement layer encoded information") in the first enhancement layer in order to support the lower transmission bit rate.

On the other hand, when the transmission bit rate set for the communication terminal **1A** is BR3, and the transmission bit rate indicated by the terminal transmission mode information in the received encoded information received from the communication terminal **1A** is BR2, the reconstruction processor **15** selects and extracts the base layer encoded information and the first enhancement layer encoded information in order to support the lower transmission bit rate.

The reconstruction processor **15** extracts the encoded information of each of the layers from the received encoded information transmitted from each of the communication terminals **1A** to **1N** to reconstruct the extracted encoded information and the control information. The reconstruction processor 15 then outputs, to the encoded information integrator **16a,** information obtained by reconstructing the extracted encoded information and the control information. More specifically, encoded information to be transmitted to the communication terminal participating in the multi-party communications, for example, the communication terminal **1A,** is deemed as encoded information of each of the layers, which is extracted by using the above-described process from the encoded information output from the communication terminals **1B** to **1N** obtained by excluding the communication terminal **1A** from all the communication terminals **1A** to **1N.** The control information to be transmitted to each of the communication terminals **1A** to **1N** is composed of relay device transmission mode information and encoded information configuration information, which are described below.

The relay device transmission mode information is designed to indicate a transmission bit rate of a signal to be transmitted to each of the communication terminals **1A** to **1N.** The transmission bit rate is selected from a plurality of predefined transmission bit rates. In the present embodiment, the relay device transmission mode information is designed to indicate any of four types of the transmission bit rates BR1, BR2, BR3 and BR4 (BR1 < BR2 < BR3 < BR4).

The encoded information configuration information is designed to indicate which one of the communication terminals **1A** to **1N** transmits the source and which type of the encoded information is. For example, when the encoded information to be transmitted to the communication terminal **1A** is composed of the base layer encoded information and the first enhancement layer encoded information, which are received from the communication terminal **1B,** and of the second enhancement layer encoded information and the third enhancement layer encoded information, which are received from the communication terminal **1C,** the encoded information configuration information indicates "B:L2 (base, enh1), C:L2 (enh2, enh3)". The characters B and C in the encoded information configuration information indicate an ID of the communication terminal **1A** and an ID of the communication terminal **1B,** respectively. The symbol L2 placed at the back of each of the IDs of the communication terminals indicates the number (hereinafter referred to as the "number of occupation layers) of the layers each occupied by encoded information obtained by reconstructing a signal received from each of the communication terminals having the IDs. When the number of the occupation layers is 1, a symbol L1 is expressed. When the number of the occupation layers is 3, a symbol L3 is expressed. The characters in the brackets indicate the layers including encoded information to be transmitted. The symbols, base, enh1, enh2, enh3 indicate the base layer encoded information, the first enhancement layer encoded information, the second enhancement layer encoded information, and the third enhancement layer encoded information, respectively.

The reconstruction processor **15** is designed to update the control parameter when the reconstruction processor **15** receives the interrupt processing output signal from any one of the first interrupt pattern processing unit **20,** the second interrupt pattern processing unit 30 and the third interrupt pattern processing unit **40.** The process for updating the control parameter will be described below.

When the first interrupt pattern processing unit **20,** the second interrupt pattern processing unit **30** or the third interrupt pattern processing unit **40** receives an interrupt signal, the first interrupt pattern processing unit **20,** the second interrupt pattern processing unit **30** or the third interrupt pattern processing unit **40,** which receives the interrupt signal, outputs the interrupt processing output signal including information (hereinafter referred to as "terminal group information") indicative of a communication terminal participating in the multi-party communications. The terminal group information is designed to indicate a communication terminal participating in the multi-party communications at the time of the generation of the interrupt processing output signal. The reconstruction processor **15** determines, in accordance with the obtained terminal group information, how to assign encoded information received from each of the communication terminals to any of the layers of encoded information to be transmitted to each of the communication terminals. The interrupt processing output signal may include the interrupt signal input to any of the first, second and third interrupt pattern processing unit **20, 30** and **40.** The reconstruction processor **15** maintains the control parameter currently set when the reconstruction processor **15** receives the interrupt signal from any of the first, second and third interrupt pattern processing unit **20, 30** and **40.**

Specifically, when the communication terminals **1A, 1B, 1C** perform the multi-party communications in the case where the number of the layers is 4 in the scalable communications, the reconstruction processor **15** determines how to assign encoded information transmitted from two of the communication terminals **1A, 1B, 1C** to the four layers in the other one of the communication terminals **1A, 1B, 1C.** The encoded information transmitted from the two of the communication terminals **1A, 1B,** and **1C** may be assigned to two of the layers in the other one of the communication terminals **1A, 1B, 1C.** In this case, the control parameter is updated to the one indicating "A:L2, B:L2, C:L2." The encoded information transmitted from the two of the communication terminals **1A, 1B,** and **1C** may also be unevenly assigned to two or more of the layers in accordance with the level of a speech/audio signal to be reproduced based on the encoded information transmitted from each of the communication terminals and with information on communication conditions including the statuses of lines used to communicate with the communication terminals. The reconstruction processor **15** determines how to assign encoded information to be transmitted to each of the communication terminals and then updates the control parameter to indicate the number of the layers assigned to the communication terminals.

The encoded information integrator **16a** receives the encoded information and the control information, which are reconstructed by and output from the reconstruction processor **15.** The encoded information integrator **16a** then integrates the encoded information and the control information for each of the communication terminals **1A** to **1N** and the like to output, to the transmitter **16b,** the encoded information and the control information, which are integrated.

The transmitter **16b** transmits, to each of the communication terminals **1A** to **1N** and the like, the encoded information and the control information, which are integrated for each of the communication terminals **1A** to **1N** and the like and output from the encoded information integrator **16a.**

The communication processor **19** is designed to connect and disconnect a line in accordance with a signal output from any of the first, second, third interrupt pattern processing units **20, 30,** and **40.** In Fig. **2****,** an arrow shown by a solid line indicates the direction of a signal flow, and an arrow shown by a dashed line indicates the direction of control.

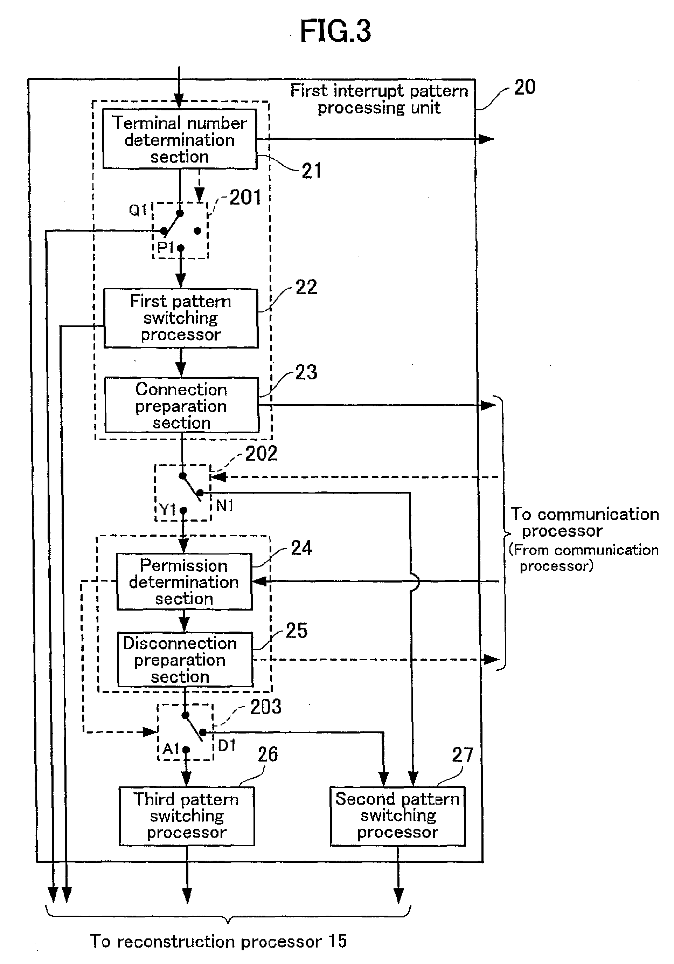

Fig. 3 is a block diagram showing the configuration of the first interrupt pattern processing unit **20** according to the first embodiment. The first interrupt pattern processing unit **20** has a terminal number determination section **21,** a first pattern switching processor **22,** a connection preparation section **23,** a permission determination section **24,** a disconnection preparation section **25,** a third pattern switching processor **26,** a second pattern switching processor **27,** and control switches **201** to **203.**

The terminal number determination section **21** receives the first pattern interrupt signal from the interrupt determination **12.** The terminal number determination section **21** then determines whether or not the number of communication terminals currently participating in the multi-party communications is smaller than the maximum number (hereinafter referred to as the "maximum terminal number) of communication terminals capable of participating in the multi-party communications. When the terminal number determination section **21** determines that the number of communication terminals currently participating in the multi-party communications is smaller than the maximum terminal number, the control switch **201** operates to connect the terminal number determination section **21** to a terminal **P1** of the control switch **201.** The terminal number determination section **21** then outputs, to the first pattern switching processor **22,** the interrupt signal and data on the number of communication terminals participating in the multi-party communications. The maximum terminal number may be a predetermined number equal to or smaller than the number of layers in which a scalable coding technique is used. When the terminal number determination section **21** determines that the number of communication terminals currently participating in the multi-party communications is not smaller than the maximum terminal number, the control switch **201** operates to connect the terminal number determination section **21** to a terminal **Q1** of the control switch **201.** The terminal number determination section **21** then outputs, to the reconstruction processor 15, the interrupt signal and data on the number of communication terminals participating in the multi-party communications.

The first pattern switching processor **22** receives the interrupt signal and the data on the number of communication terminals participating in the multi-party communications, which is output by the terminal number determination section **21,** when the control switch **201** operates to connect the terminal number determination section **21** to the terminal **P1.** The first pattern switching processor **22** then outputs terminal group information on the communication terminals **1B** to **1N** obtained by excluding a communication terminal (hereinafter, regarded as the communication terminal **1A**), which transmits a participation request signal designed to cause the communication terminal **1A** to **1N** to participate in the multi-party communications and included in the first pattern interrupt signal, from all the communication terminals **1A** to **1N** participating in the multi-party communications. The first pattern switching processor **22** is designed to output the first pattern interrupt signal to the communication preparation section **23** when the terminal number determination section **21** is in connection with the terminal **P1** of the control switch **201.** The first pattern switching processor 22 does not operate when the terminal number determination section **21** is in connection with the terminal **Q1** of the control switch **201.**

The connection preparation section **23** receives the first pattern interrupt signal from the first pattern switching processor **22.** The connection preparation section **23** outputs, to the communication processor **19,** information indicative of the communication terminal **1A** that transmits the participation request signal and of the communication terminal **1Z** that is to participate in the multi-party communications, and included in the first pattern interrupt signal. The connection preparation section **23** outputs the first pattern interrupt signal to the control switch **202.**

The communication processor **19** shown in Fig. **2** receives the information output from the connection preparation section **23** shown in Fig. **3****.** The communication processor **19** then connects the communication terminal **1A** with the communication **terminal 1N** by use of a line other than the line used for the multi-party communications. The communication processor **19** controls the control switch 202 to connect the connection preparation section **23** to a terminal **Y1** of the control switch **202** when the connection between the communication terminals **1A** and **1Z** is established. The communication processor **19** controls the control switch **202** to connect the connection preparation section **23** to a terminal **N1** of the control switch **202** when the connection between the communication terminals **1A** and **1Z** is not established. When the communication processor **19** receives a participation acceptance/denial signal indicating whether or not to participate in the multi-party communications from the communication terminal **1Z** during communications between the communication terminals **1A** and **1Z** through the line other than the line used for the multi-party communications, the communication processor **19** outputs the participation acceptance/denial signal to the permission determination section **24.** Hereinafter, a signal indicating participation in multi-party communications is referred to as a "participation acceptance signal" while a signal indicating denial of participation in multi-party communications is referred to as a "participation denial signal." When the communication processor **19** outputs the participation acceptance/denial signal to the permission determination section **24,** the communication processor **19** executes processing for disconnecting (terminating) the communications performed through the line other than the line used for the multi-party communications.

The permission determination section **24** is designed to receive the first pattern interrupt signal transmitted from the connection preparation section **23** and the participation acceptance/denial signal output from the communication processor **19** when the connection preparation section **23** is in connection with the terminal **Y1** of the control switch **202.** The permission determination section 24 controls the control switch **203** to connect the disconnection preparation section **25** to the terminal **A1** and outputs the first pattern interrupt signal to the disconnection preparation section **25** when the participation acceptance/denial signal output from the communication processor **19** indicates a participation acceptance signal. The permission determination section 24 controls the control switch **203** to connect the disconnection preparation section **25** to the terminal **D1** and outputs the first pattern interrupt signal to the disconnection preparation section **25** when the participation acceptance/denial signal output from the communication processor **19** indicates a participation denial signal. The permission determination section 24 does not operate when the connection preparation section **23** is in connection with the terminal **1N** of the control switch **202.**

The second pattern switching processor **27** receives the first pattern interrupt signal output from the connection preparation section **23** when the connection preparation section **23** is in connection with the terminal **1N** of the control switch **202.** The second pattern switching processor **27** then outputs, to the reconstruction processor 15, terminal group information on the communication terminals **1A** to **1N,** which is obtained by adding information on the communication terminal **1A** to the terminal group information on the communication terminals **1B** to **1N.** In this case, the information on the communication terminal 1A is configured to be included in the first pattern interrupt signal transmitted from the communication terminal **1A**. The second pattern switching processor **27** does not operate when the connection preparation section **23** is in connection with the terminal **1N** of the control switch **202** and the disconnection preparation section 25 is in connection with the terminal **D1** of the control switch **203.**

The disconnection preparation section **25** receives the first pattern interrupt signal output from the permission determination section **24.** The disconnection preparation section **25** then outputs the first pattern interrupt signal to the second pattern switching processor **27** when the disconnection preparation section **25** is in connection with the terminal **D1** of the control switch **203.** The disconnection preparation section **25** outputs, to the third pattern switching processor **26,** the first pattern interrupt signal received from the permission determination section 24 when the disconnection preparation section 25 is in connection with the terminal **A1** of the control switch **203.** The disconnection preparation section **25** controls the communication processor **19** to cause the communication processor **19** to execute processing for disconnecting (terminating) the communications performed through the line other than the line used for the multi-party communications.

The third pattern switching processor **26** receives the first pattern interrupt signal output from the disconnection preparation section **25** when the disconnection preparation section **25** is in connection with the terminal **A1** of the control switch **203.** The third pattern switching processor **26** then outputs, to the reconstruction processor 15, terminal group information on the communication terminals **1A** to **1N** and **1Z,** obtained by adding the information on the communication terminal **1A** and information on the communication terminal 1Z to the terminal group information on the communication terminals **1B** to **1N.** In this case, the information on the communication terminal **1A** is included in the first pattern interrupt signal transmitted from the communication terminal **1A**. The third pattern switching processor **26** does not operate when the disconnection preparation section **25** is in connection with the terminal **D1** of the control switch **203.**

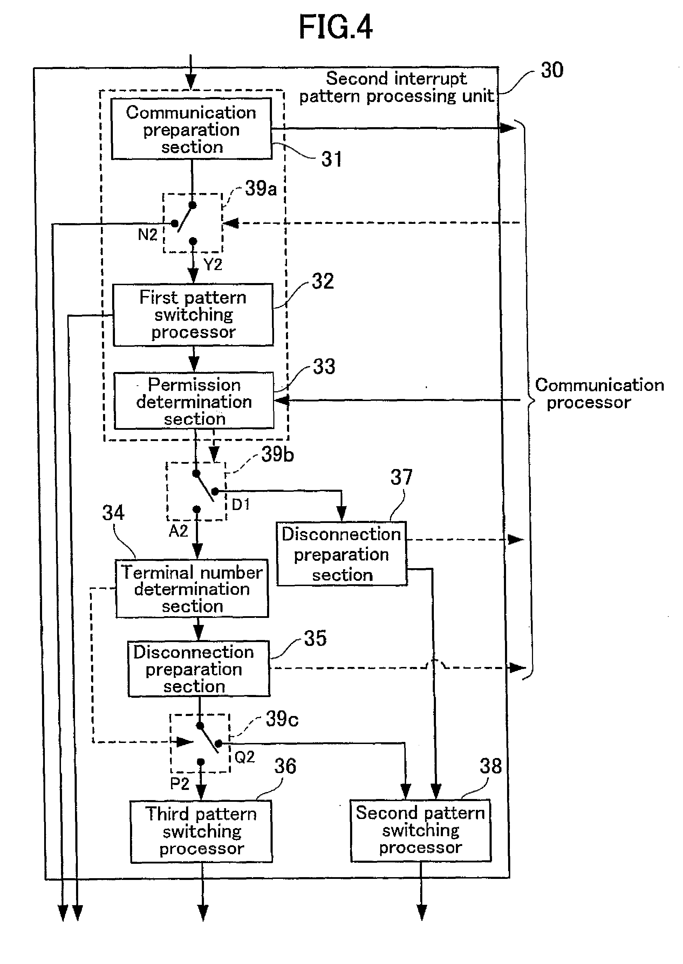

Fig. **4** is a block diagram showing the second pattern processing unit **30** according to the present embodiment. The second pattern processing unit **30** has a connection preparation section **31**, a first pattern switching processor **32,** a permission determination **33,** a terminal number determination section 34, disconnection preparation sections **35** and **37,** a third pattern switching processor **36,** a second pattern switching processor **38,** and control switches **39a** to **39c.**

The connection preparation section **31** receives the second pattern interrupt signal output from the interrupt determination section **12.** The connection preparation section **31** then outputs information on the communication terminal **1Z** and on the communication terminal **1A** which is in multi-party communications and to which the communication terminal **1Z** transmits a line connection request signal to attempt to connect. In this case, the information is included in the second pattern interrupt signal. The connection preparation section 31 outputs the second pattern interrupt signal to the control switch 39a.

The communication processor **19** shown in Fig. **2** receives the information on the communication terminals **1A** and **1Z** from the connection preparation section **31** shown in Fig. **4****.** The communication processor **19** then connects the communication terminal **1A** with the communication terminal **1Z** by use of a line other than the line used for the multi-party communications. The communication processor **19** controls the control switch **39a** to connect the connection preparation section **31** to a terminal **Y2** of the control switch **39a** when the connection between the communication terminals **1A** and **1Z** is established. The communication processor **19** controls the control switch **39a** to connect the connection preparation section **31** to a terminal **N2** of the control switch **39a** when the connection between the communication terminals **1A** and **1Z** is not established.

When the communication processor **19** shown in Fig. **2** receives a participation acceptance signal or a participation denial signal from the communication terminal **1A** during communications between the communication terminals **1A** and **1Z** through the line other than the line used for the multi-party communications, the communication processor **19** outputs the participation acceptance signal or participation denial signal to the permission determination section **33.** When the communication processor **19** outputs the participation acceptance signal or participation denial signal to the permission determination section **33,** the disconnection preparation section **35** or **37** controls the communication processor **19** to cause the communication processor **19** to execute processing for disconnecting (terminating) the communications performed through the line other than the line used for the multi-party communications. It should be noted that the communication processor **19** executes the processing for disconnecting (terminating) the communications performed through the line other than the line used for the multi-party communications when the communication processor **19** receives a disconnection request signal from the communication terminal **1A** or **1Z.**

The first pattern switching processor **32** shown in Fig. **3** receives the second pattern interrupt signal output from the connection preparation section **31** when the connection preparation section **31** is in connection with the terminal **Y2** of the control switch **39a.** The first pattern switching processor **32** outputs terminal group information on the communication terminals **1B** to **1N** obtained by removing information on the communication terminal **1A** from the terminal group information on the communication terminals **1A** to **1N**. In this case, the information on the communication terminal **1A** is included in the second pattern interrupt signal. The first pattern switching processor **32** outputs the second pattern interrupt signal to the permission determination section 33 when the connection preparation section **31** is in connection with the terminal **Y2** of the control switch **39a.** The first pattern switching processor **32** does not operate when the connection preparation section **31** is in connection with the terminal **N2** of the control switch **39a.**

The permission determination section **33** receives the second pattern interrupt signal output from the first pattern switching processor **32** and the participation acceptance signal or participation denial signal output from the communication processor **19.** When the permission determination section **33** receives the participation acceptance signal output from the communication processor **19,** the permission determination section **33** controls the control switch **39a** to connect the permission determination section **33** to the terminal **A2** to output the second pattern interrupt signal to the terminal number determination section **34.** When the permission determination section **33** receives the participation denial signal output from the communication processor **19,** the permission determination section **33** controls the control switch **39a** to connect the permission determination section **33** to the terminal **D2** to output the second pattern interrupt signal to the disconnection preparation section **37.**

The terminal number determination section **34** receives the second pattern interrupt signal output from the permission determination section **33** when the permission determination section **33** is in connection with a terminal **A2** of the control switch 39b. The terminal number determination section **34** compares the number of communication terminals currently participating in the multi-party communications with the maximum number (maximum terminal number) of terminals capable of participating in the multi-party communications. When the number of the communication terminals currently participating in the multi-party communications is smaller than the maximum terminal number, the terminal number determination section **34** controls the control switch **39c** to connect the disconnection preparation section **35** to a terminal **P2** of the control switch **39c** to output the second pattern interrupt signal to the disconnection preparation section **35.** The maximum terminal number may be a predetermined number equal to or less than the number of layers in which a scalable coding technique is used. When the number of the communication terminals currently participating in the multi-party communications is not smaller than the maximum terminal number, the terminal number determination section **34** controls the control switch **39c** to connect the disconnection preparation section **35** to a terminal **Q2** of the control switch **39c** to output the second pattern interrupt signal to the disconnection preparation section **35.**

The disconnection preparation section **37** receives the second pattern interrupt signal output from the permission determination section **33** when the permission determination section **33** is in connection with the terminal **D2** of the control switch **39b.** The disconnection preparation section **37** then outputs the received second pattern interrupt signal to the second pattern switching processor **38.** The disconnection preparation section **37** controls the communication processor **19** to cause the communication processor **19** to execute processing for disconnecting (terminating) the communications performed through the line other than the line used for the multi-party communications when the control switch **39b** is in connection with the terminal **D2.** The disconnection preparation section **37** is designed not to operate when the control switch **39b** is in connection with the terminal **A2.**

The disconnection preparation section **35** receives the second pattern interrupt signal output from the terminal number determination section **34.** The disconnection preparation section **35** outputs the received second pattern interrupt signal to the second pattern switching processor **38** when the disconnection preparation section **35** is in connection with the terminal **Q2** of the control switch **39c.** When the disconnection preparation section **35** is in connection with the terminal P2 of the control switch **39c,** the disconnection preparation section **35** outputs the received second pattern interrupt signal to the third pattern switching processor **36.** The disconnection preparation section **35** controls the communication processor **19** to cause the communication processor **19** to execute processing for disconnecting (terminating) the communications performed through the line other than the line used for the multi-party communications.

The second pattern switching processor **38** receives the second pattern interrupt signal output from the disconnection preparation section **37** when the permission determination section **33** is in connection with the terminal **D2** of the control switch **39b.** The second pattern switching processor **38** then outputs terminal group information on the communication terminals **1A** to **1N** to the reconstruction processor **15.** In this case, the terminal group information is obtained by adding the information on the communication terminal **1A** to the terminal group information on the communication terminals **1B** to **1N,** and the information on the communication terminal **1A** is included in the second pattern interrupt signal transmitted from the communication terminal **1Z** participating in the multi-party communications. The second pattern switching processor **38** receives the second pattern interrupt signal output from the disconnection preparation section **35** when the disconnection preparation section **35** is in connection with the terminal **Q2** of the control switch **39c.** The second pattern switching processor **38** then outputs the terminal group information on the communication terminals **1A** to **1N** to the reconstruction processor **15.** In this case, the terminal group information on the communication terminals **1A** to **1N** is obtained by adding the information on the communication terminal 1A to the terminal group information on the communication terminals **1B** to **1N**, the information on the communication terminal **1A** is included in the first pattern interrupt signal transmitted from the communication terminal **1A**. The second pattern switching processor **38** does not operate when the permission determination section **33** is in connection with the terminal **D2** of the control switch **39b** and the disconnection preparation section **35** is in connection with the terminal **Q2** of the control switch **39c.**

The third pattern switching processor **36** receives the second pattern interrupt signal output from the disconnection preparation section **35** when the disconnection preparation section **35** is in connection with the terminal P2 of the control switch **39c.** The third pattern switching processor **36** then outputs the terminal group information on the communication terminals **1A** to **1N** and **1Z** to the reconstruction processor **15.** In this case, the terminal group information is obtained by adding the information on the communication terminal **1A** included in the second pattern interrupt signal and the information on the communication terminal **1Z** to the terminal group information **1B** to **1N.** The third pattern switching processor **36** does not operate when the permission determination section **33** is in connection with the terminal **D2** of the control switch **39b**.

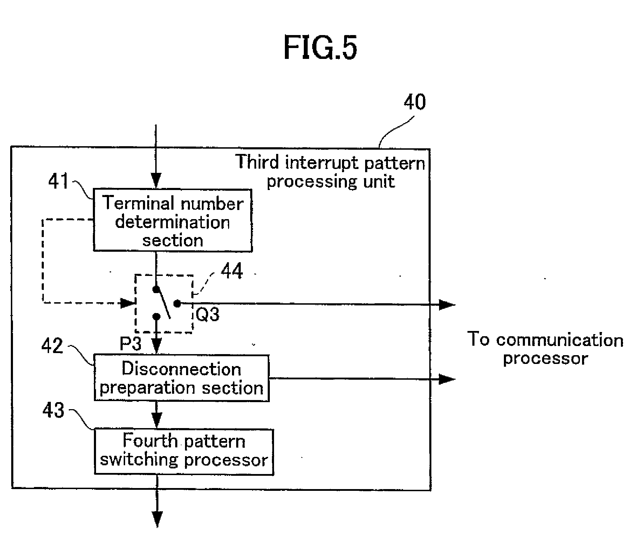

Fig. **5** is a block diagram showing the configuration of the third interrupt pattern processing unit **40** according to the present embodiment. The third interrupt pattern processing unit **40** has a terminal number determination section **41,** a disconnection preparation section **42,** a fourth pattern switching processor **43,** and a control switch **44.**

The terminal number determination section **41** receives the third pattern interrupt signal output from the interrupt determination section **12.** The terminal number determination section **41** determines whether or not the number of communication terminals participating in the multi-party communications is equal to or less than 2. When the terminal number determination section **41** determines that the number of communication terminals participating in the multi-party communications is equal to or more than 3, the terminal number determination section **41** controls the control switch **44** to connect the terminal number determination section **41** to a terminal **P3** of the control switch **44** to output the third pattern interrupt signal to the disconnection preparation section **42.** When the terminal number determination section **41** determines that the number of communication terminals participating in the multi-party communications is equal to or less than 2, the terminal number determination section **41** controls the control switch **44** to connect the terminal number determination section **41** to a terminal **Q3** of the control switch **44** to output the third pattern interrupt signal to the communication processor **19.**

The disconnection preparation section **42** receives the third pattern interrupt signal when the terminal number determination section **41** determines that the number of communication terminals participating in the multi-party communications is equal to or more than 3. The disconnection preparation section **42** then transmits the received third pattern interrupt signal to the communication processor **19** and requests to disconnect the communication terminal **1N** specified in the third pattern interrupt signal. The disconnection preparation section **42** also outputs the received third pattern interrupt signal to the fourth pattern switching processor **43.** When the terminal number determination section **41** determines that the number of communication terminals participating in the multi-party communications is equal to or less than 2, the disconnection preparation section **42** does not perform the above-described operations.

The fourth pattern switching processor **43** outputs terminal group information on the communication terminals **1A** to **1M** to the reconstruction processor **15** when the fourth pattern switching processor **43** receives the third pattern interrupt signal from the disconnection preparation section **42.** In this case, the terminal group information is obtained by removing the information on the communication terminal **1N** from the terminal group information on the communication terminals 1A to 1N. When the terminal number determination section **41** determines that the number of communication terminals participating in the multi-party communications is equal to or less than 2, the fourth pattern switching processor **43** does not perform the above-described operations.

The communication processor **19** shown in Fig. **2** executes processing for terminating the multi-party communications when the communication processor **19** receives the third pattern interrupt signal output from the terminal number determination **41** shown in Fig. **5**. The processing for terminating the multi-party communications is not described since the processing is executed similarly to processing for terminating two-way communications.

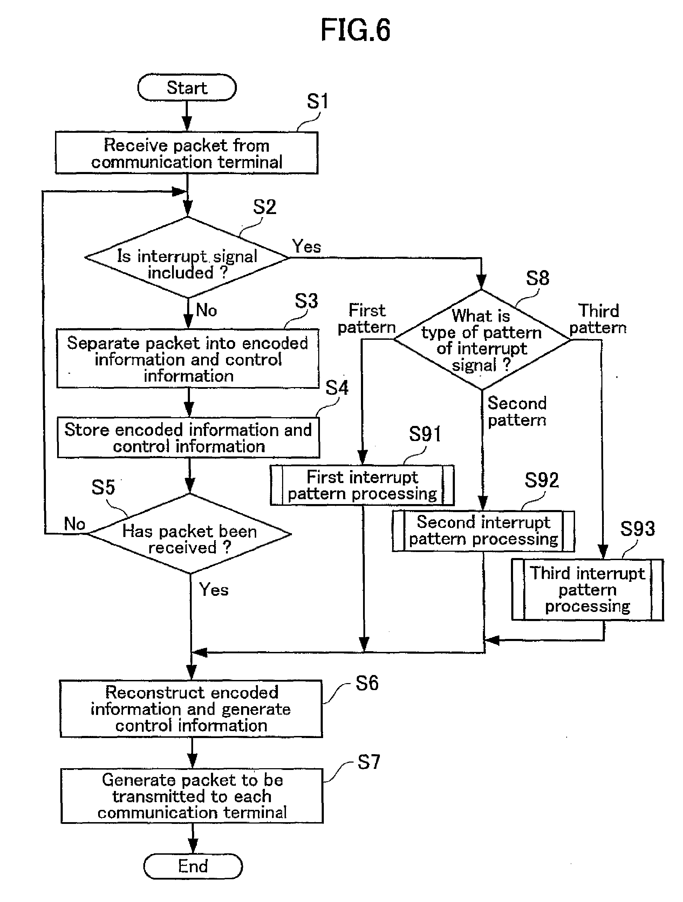

Fig. **6** is a flowchart showing a process of operations of the relay device **10** according to the present embodiment. The operations of the relay device **10** are controlled by a CPU constituting a controller (not shown) of the relay device **10.**

The receiver **11** of the relay device **10** receives a signal transmitted as a packet from each of the communication terminals **1A** to **1N** and the like outputs the received signal to the interrupt determination section **12** in step **S1.**

The interrupt determination section **12** determines whether or not the signal received from each of the communication terminals **1A** to **1N** in step **S1** includes an interrupt signal for connecting or disconnecting a corresponding communication terminal to increase or decrease the number of the communication terminals participating in the multi-party communications in step **S2**. When the interrupt determination section **12** determines that the signal received from each of the communication terminals **1A** to **1N** includes the interrupt signal, the process proceeds to step **S8**. When the interrupt determination section **12** determines that the signal received from each of the communication terminals **1A** to **1N** does not include the interrupt signal, the interrupt determination section **12** outputs encoded information to the encoded information separator **13,** and the process proceeds to step **S3.** However, even when the interrupt determination section **12** determines that the received signal from each of the communication terminals **1A** to **1N** includes the interrupt signal in step **S2,** the process on a signal not including an interrupt signal proceeds to step **S3.**

The encoded information separator **13** of the relay device **10** receives a signal including the encoded information output from the interrupt determination section **12** when the interrupt determination section **12** determines that the signal received from each of the communication terminals **1A** to **1N** does not include the interrupt signal in step **S2.** The encoded information separator **13** sequentially separates the received encoded information into encoded information component and a control information component. The encoded information separator **13** then outputs the encoded information component and the control information component to the encoded information managing section **14** in step **S3.**

The encoded information managing section **14** sequentially accumulates the encoded information component and the control information component until the encoded information managing section **14** obtains encoded information and control information in step **S4.**

The encoded information managing section **14** of the relay device **10** determines whether or not the encoded information managing section **14** obtains the encoded information and the control information in step **S5** as a result of the sequential accumulation of the encoded information component and the control information component in step **S4.** When the encoded information managing section **14** determines that the encoded information managing section **14** does not obtain the encoded information and the control information, steps **S2** to **S5** are repeated. When the encoded information managing section 14 determines that the encoded information managing section **14** obtains the encoded information and the control information, the process proceeds to step **S6.**

When the encoded information managing section **14** determines that the signal received from each of the communication terminals **1A to 1N** includes the interrupt signal, the interrupt determination section **12** of the relay device **10** determines the type of the pattern of the interrupt signal. The interrupt determination section **12** then outputs the interrupt signal to the first interrupt pattern processing unit **20,** the second interrupt pattern processing unit **30,** or the third interrupt pattern processing unit **40** in accordance with the type of the pattern of the interrupt signal in step **S8.**

When the interrupt determination section **12** determines that the interrupt signal has the first pattern, the interrupt determination section **12** outputs the first pattern interrupt signal to the first interrupt pattern processing unit **20.** The first interrupt pattern processing unit **20** then executes first interrupt pattern processing described later. The first interrupt pattern processing unit **20** outputs an interrupt processing output signal obtained by the first interrupt pattern processing to the reconstruction processor **15** in step **S91.**

When the interrupt determination section **12** determines that the interrupt signal has the second pattern, the interrupt determination section **12** outputs the second pattern interrupt signal to the second interrupt pattern processing unit **30.** The second interrupt pattern processing unit **30** then executes second interrupt pattern processing described later. The second interrupt pattern processing unit **30** outputs an interrupt processing output signal obtained by the second interrupt pattern processing to the reconstruction processor **15** in step **S92.**

When the interrupt determination section **12** determines that the interrupt signal has the third pattern, the interrupt determination section **12** outputs the third pattern interrupt signal to the third interrupt pattern processing unit **40.** The third interrupt pattern processing unit **40** then executes third interrupt pattern processing described later. The third interrupt pattern processing unit **40** outputs an interrupt processing output signal obtained by the third interrupt pattern processing to the reconstruction processor **15** in step **S93.**

When the encoded information managing section **14** determines that the encoded information managing section **14** obtains the encoded information and the control information, the reconstruction processor **15** reconstructs the encoded information to be transmitted to each of the communication terminals **1A** to **1N** and the like and generates control information to output the reconstructed encoded information and the generated control information to the encoded information integrator **16a** in step **S6.**

When the encoded information integrator **16a** receives the reconstructed encoded information and the generated control information in step **S6,** the encoded information integrator **16a** outputs the reconstructed encoded information and the generated control information to the transmitter **16b.** The transmitter 16b then transmits the reconstructed encoded information and the generated control information to each of the communication terminals **1A** to **1N** in step **S7.**

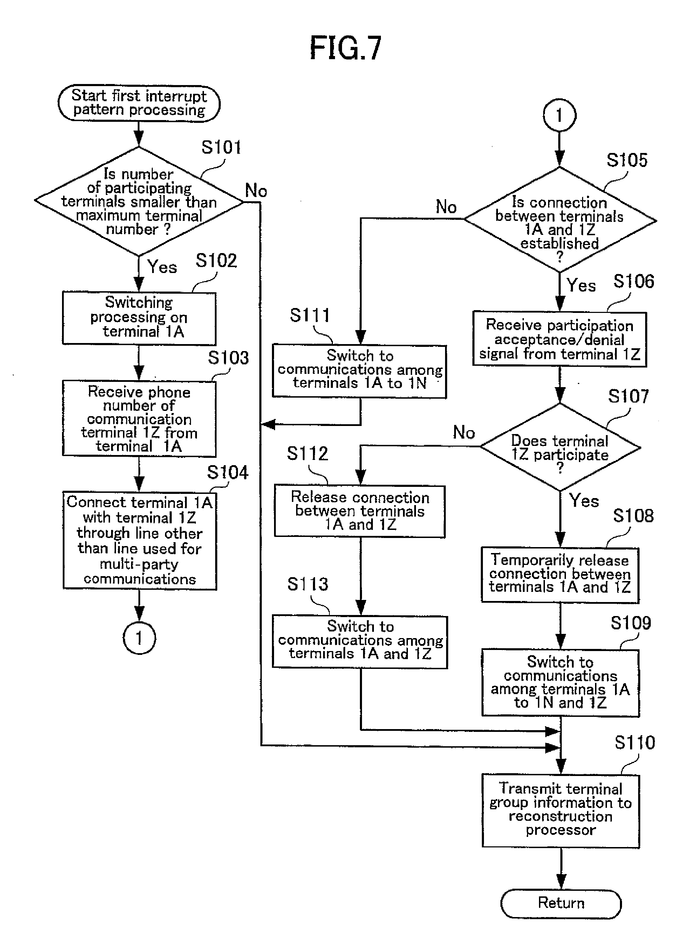

Fig. **7** is a flowchart showing a process for the first interrupt pattern processing according to the present embodiment. The CPU (not shown) constituting the controller of the relay device **10** controls operations of the first interrupt pattern processing unit **20.** The operations are described below.

The terminal number determination section **21** of the first pattern processing unit **20** determines whether or not the number of communication terminals currently participating in the multi-party communications among the communication terminals **1A** to **1N** is smaller than the maximum number (maximum terminal number) of communication terminals capable of participating in the multi-party communications in step **S101.** When the terminal number determination section **21** determines that the number of the communications terminals currently participating in the multi-party communications is smaller than the maximum terminal number, the process proceeds to step **S102.** When the terminal number determination section **21** determines that the number of the communications terminals currently participating in the multi-party communications is not smaller than the maximum terminal number, the process proceeds to step **S110.**

When the terminal number determination section **21** determines that the number of the communications terminals currently participating in the multi-party communications is smaller than the maximum terminal number, the communication processor **19** temporarily disconnects the communication terminal **1A** from a line (hereinafter referred to as a "multi-party communication line") used for the multi-party communications, and the terminal number determination section **21** generates terminal group information on the communication terminals **1B** to **1N** and outputs the generated terminal group information to the reconstruction processor **15** in step **S102.**

When the communication processor **19** temporarily disconnects the communication terminal **1A** from the multi-party communication line, the communication processor **19** receives, from the communication terminal **1A,** a signal indicating a phone number of the communication terminal **1Z** that is to participate in the multi-party communications in step **S103.**

When the communication processor **19** receives the signal indicating the phone number of the communication terminal **1Z** from the communication terminal **1A,** the communication processor **19** connects the communication terminal **1A** with the communication terminal **1Z** through a line other than the line used for the multi-party communications in step **S104.**

When the communication processor **19** connects the communication terminal 1A with the communication terminal **1Z** in step **S104,** the communication processor **19** determines whether or not the connection between the communication terminals **1A** and **1Z** is established in step **S105.** When the communication processor **19** determines that the connection between the communication terminals **1A** and **1Z** is established, the process proceeds to step **S106.** When the communication processor **19** determines that the connection between the communication terminals **1A** and **1Z** is not established, the process proceeds to step **S111.**

When the communication processor **19** determines that the connection between the communication terminals **1A** and **1Z** is established, the communication processor **19** receives a participation acceptance/denial signal from the communication terminal 1Z in step **S 106.**

When the communication processor **19** receives the participation acceptance/denial signal from the communication terminal **1Z** in step **S106,** the permission determination section **24** determines whether or not the received participation acceptance/denial signal is a participation acceptance signal in step **S107.** When the permission determination section **24** determines that the received participation acceptance/denial signal is a participation acceptance signal, the process proceeds to step **S108.** When the permission determination section **24** determines that the received participation acceptance/denial signal is a participation denial signal, the process proceeds to step **S112.**

When the permission determination section **24** determines that the received participation acceptance/denial signal is a participation acceptance signal in step **S107,** the communication processor **19** temporarily releases the connection between the communication terminals **1A** and **1Z** in step **S108.**

The communication processor **19** connects the communication terminals **1A** and **1Z** to the multi-party communication line to cause the communication terminals **1A** and **1Z** to participate in the multi-party communications when the connection between the communication terminals **1A** and **1Z** is temporarily released in step **S108.**

When the communication processor **19** determines that the connection between the communication terminals **1A** and **1Z** is not established in step **S105,** the communication processor **19** connects the communication terminal **1A** to the multi-party communication line to allow the communication terminals **1A** to **1N** to perform the multi-party communications in step **S111.**

When the permission determination section **24** determines that the received participation acceptance/denial signal is a participation denial signal in step **S107,** the communication processor 19 releases the connection between the communication terminals **1A** and **1Z** in step **S112.**

When the communication processor **19** releases the connection between the communication terminals **1A** and **1Z** in step **S112,** the communication processor **19** connects the communication terminal **1A** to the multi-party communication line to allow the communication terminals **1A** to **1N** to perform the multi-party communications in step **S113.**

When the terminal number determination section **21** determines that the number of communications terminals currently participating in the multi-party communications among the communication terminals **1A** to **1N** is not smaller than the maximum terminal number in step **S101,** or when the communication processor **19** connects the communication terminals **1A** and **1Z** to the multi-party communication line in step **S109,** or when the communication processor **19** connects the communication terminal **1A** to the multi-party communication line in step **S111,** or when the communication processor **19** connects the communication terminal **1A** to the multi-party communication line in step **S113,** the first pattern interrupt processing unit **10** outputs an interrupt processing output signal such as terminal group information to the reconstruction processor 15 in step **S110.**

The interrupt processing output signal generated in step **S110** is the first pattern interrupt signal when the terminal number determination section **21** determines that the number of the communications terminals participating in the multi-party communications is smaller than the maximum terminal number in step **S101.** The interrupt processing output signal generated in step **S110** is the terminal group information on the communication terminals **1A** to **1N** and **1Z** when the communication terminals **1A** and **1Z** are connected to the multi-party communication line in step **S109.** The interrupt processing output signal generated in step **S110** is the terminal group information on the communication terminals **1A** to **1N** when the communication terminal **1A** is connected to the multi-party communication line in step **S111** and when the communication terminal **1A** is connected to the multi-party communication line in step **S113.**

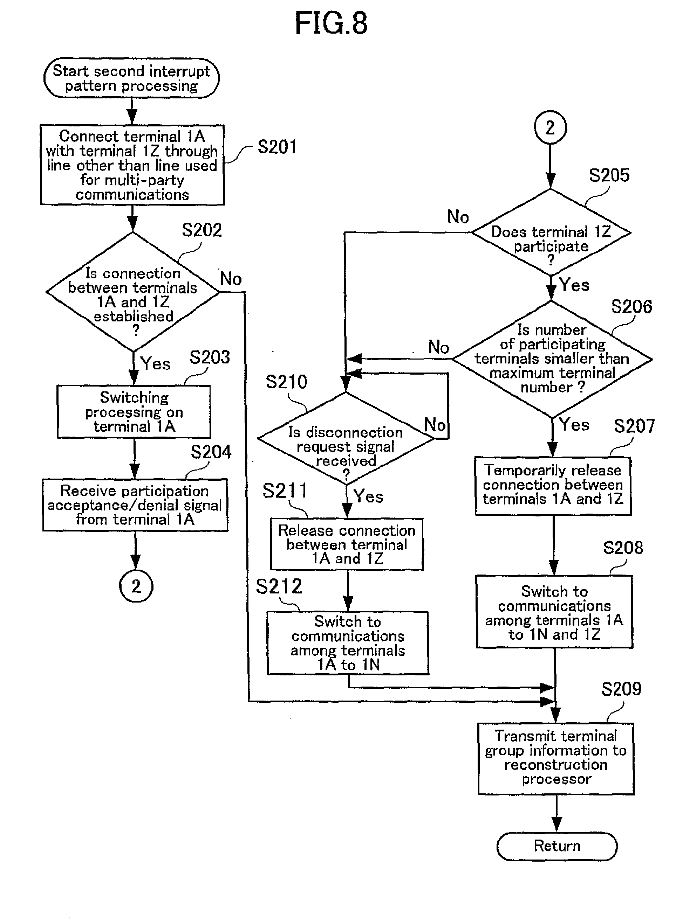

Fig. **8** is a flowchart showing a process for the second interrupt pattern processing according to the present embodiment. The CPU (not shown) constituting the controller of the relay device **10** controls operations of the second interrupt pattern processing unit **30.** The operations are described below.

The connection preparation section **31** of the second interrupt pattern processing unit 30 outputs the second pattern interrupt signal to the communication processor **19** when the connection preparation section **31** receives the second pattern interrupt signal. The communication processor **19** executes connection processing for connecting the communication terminal **1Z** that transmits the second pattern interrupt signal with a communication terminal (hereinafter regarded as the "communication terminal **1A)** to be connected to the communication terminal **1Z** through a line other than the line used for multi-party communications in step **S201.**

When the communication processor **19** executes the connection processing, the communication processor **19** determines whether or not the connection between the communication terminals **1A** and **1Z** is established in step **S202.** When the communication processor **19** determines that the connection between the communication terminals **1A** and **1Z** is established, the process proceeds to step **S203.** When the communication processor **19** determines that the connection between the communication terminals **1A** and **1Z** is not established, the process proceeds to step **S209.**

When the communication processor **19** determines that the connection between the communication terminals **1A** and **1Z** is established in step **S202,** the communication processor **19** temporarily disconnects the communication terminal 1A from a line (hereinafter referred to as a multi-party communication line) used for the multi-party communications and generates terminal group information on the communication terminals **1B** to **1N** to output the generated terminal group information to the reconstruction processor 15 in step **S203.**

When the communication processor **19** temporarily disconnects the communication terminal **1A** from the multi-party communication line in step **S203,** the communication processor **19** receives a participation acceptance/denial signal from the communication terminal **1A** in step **S204.**

When the communication processor **19** receives the participation acceptance/denial signal from the communication terminal **1A** in step **S204,** the permission determination section **33** determines whether or not the received participation acceptance/denial signal is a participation acceptance signal in step **S205.** When the permission determination section **33** determines that the received participation acceptance/denial signal is a participation acceptance signal, the process proceeds to step **S206.** When the permission determination section **33** determines that the received participation acceptance/denial signal is a participation denial signal, the process proceeds to step **S210.**

When the permission determination section **33** determines that the participation acceptance/denial signal received in step **S205** is a participation acceptance signal, the terminal number determination section **34** determines whether or not the number of communication terminals participating in the multi-party communications is smaller than the maximum terminal number in step **S206.** When the terminal number determination section 34 determines that the number of communication terminals participating in the multi-party communications is smaller than the maximum terminal number, the process proceeds to step **S207.** When the terminal number determination section **34** determines that the number of communication terminals participating in the multi-party communications is not smaller than the maximum terminal number, the process proceeds to step **S210.**

When the terminal number determination section 34 determines that the number of communication terminals participating in the multi-party communications is smaller than the maximum terminal number in step **S206,** the communication processor **19** temporarily releases the connection between the communication terminals **1A** and **1Z** in step **S207.**

When the communication processor 19 temporarily releases the connection between the communication terminals **1A** and **1Z** in step **S207,** the communication processor 19 connects the communication terminals 1A and 1Z to the multi-party communication line to cause the communication terminals **1A** and **1Z** to participate in the multi-party communications in step **S208.**

When the permission determination section 33 determines that the participation acceptance/denial signal received in step **S205** is a participation denial signal, the communication processor **19** waits for a disconnection request signal in step **S210.** When the communication processor 19 determines that the disconnection request signal is received, the process proceeds to step **S211.**

The communication processor 19 temporarily releases the connection between the communication terminals **1A** and **1Z** in step **S211** when the communication processor **19** determines that the disconnection request signal is received in step **S210.**

When the communication processor 19 temporarily releases the connection between the communication terminals **1A** and **1Z** in step **S211,** the communication processor **19** connects the communication terminal **1A** to the multi-party communication line to cause the communication terminal **1A** to participate in the multi-party communications in step **S212.**

The communication processor **19** outputs an interrupt processing output signal such as terminal group information in **S209** when the communication processor **19** determines that the connection between the communication terminals **1A** and **1Z** is not established in step **S202,** or when the communication processor **19** connects the communication terminals **1A** and **1Z** to the multi-party communication line in step **S208,** or when the communication processor **19** connects the communication terminal **1A** to the multi-party communication line in step **S212.**

The interrupt processing output signal generated in step **S209** is the second pattern interrupt signal when the communication processor **19** determines that the connection between the communication terminals **1A** and **1Z** is not established in step **S202.** The interrupt processing output signal generated in step **S209** is the terminal group information on the communication terminals **1A** to **1N** and **1Z** when the communication terminals **1A** and **1Z** are connected to the multi-party communication line in step **S208.** The interrupt processing output signal generated in step **S209** is the terminal group information on the communication terminals **1A** to **1N** when the communication terminal **1A** is connected to the multi-party communication line in step **S212.**

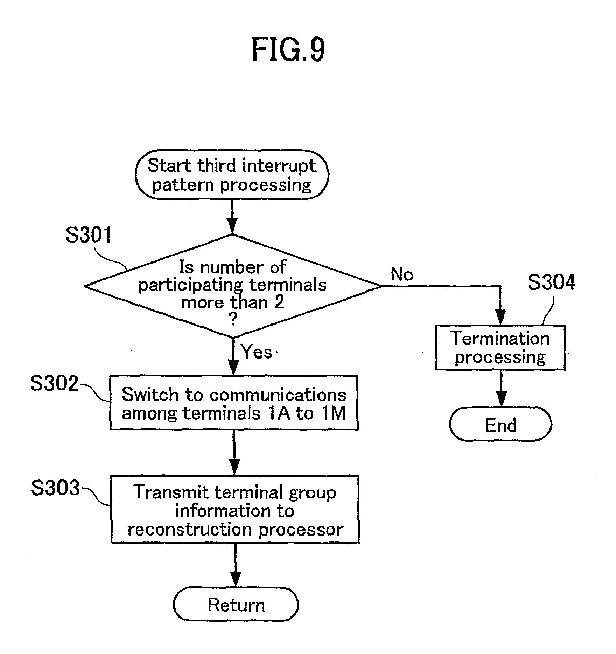

Fig. **9** is a flowchart showing a process for the third interrupt pattern processing according to the present embodiment. The CPU (not shown) constituting the controller of the relay device **10** controls operations of second interrupt pattern processing unit **30.** The operations are described below.

The terminal determination section **41** of the third interrupt pattern processing section **40** receives the third pattern interrupt signal. When the terminal determination section **41** receives the third pattern interrupt signal, the terminal determination section **41** determines whether or not the number of communication terminals participating in the multi-party communications among the communication terminals **1A** to **1N** is more than 2 in step **S301.** The terminal determination section **41** determines that the number of communication terminals participating in the multi-party communications among the communication terminals **1A** to **1N** is more than 2, the process proceeds to step **S302.** The terminal determination section **41** determines that the number of communication terminals participating in the multi-party communications among the communication terminals **1A** to **1N** is less than 3, the process proceeds to step **S304.**

When terminal determination section **41** determines that the number of communication terminals participating in the multi-party communications among the communication terminals **1A** to **1N** is more than 2 in step **S301,** the communication processor **19** disconnects the communication terminal **1A,** which transmits the third pattern interrupt signal, from the multi-party communication line, and switches the communications among the communication terminals **1A** to **1N** to the communications among the communication terminals **1A** to **1M** in step **S302.**

When the communication terminal **1N** is disconnected from the multi-party communication line in step **S302**, the fourth pattern switching processor **43** outputs, to the reconstruction processor **15,** terminal group information on the communication terminals **1A** to **1M.** In this case, the terminal group information is obtained by removing the information on the communication terminal **1A** included in the third pattern interrupt signal from the terminal group information on the communication terminals **1A** to **1N.**

When terminal determination section **41** determines that the number of communication terminals participating in the multi-party communications among the communication terminals **1A** to **1N** is equal to or smaller than 2, the terminal number determination section **41** outputs the third pattern interrupt signal to the communication processor **19,** and the communication processor **19** executes processing for terminating the multi-party communications in step **S304.**

The relay device **10** constructed as described above according to the present embodiment is designed to reconstruct received encoded information to transmit the reconstructed encoded information without decoding the encoded information. This decreases communication cost, reduces the number of communication lines used and suppresses an increase in cost necessary for the processing. The relay device **10** therefore makes it possible to achieve a multi-party communication system capable of preventing a decoded speech/audio signal from being significantly deteriorated.

The communication system has the relay device designed to transmit speech/audio and music signals by using a scalable coding technique, separate encoded information transmitted from each of a plurality of communication terminals into information encoded on a layer basis, reconstruct the separated encoded information and transmit the reconstructed encoded information to each of the communication terminals **1A** to **1N** and the like. The communication system thus constructed as described above makes it possible to achieve flexible multi-party communications. The relay device capable of reconstructing the encoded information on a layer basis makes it possible to achieve multi-party communications without substantial deterioration of the quality of a decoded signal as compared with a conventional technique in which a relay device decodes encoded information transmitted from a plurality of communication terminals, overlaps the decoded information, and encodes the decoded information.

The relay device according to the present embodiment is designed to generate control information used to combine the encoded information to be transmitted to the communication terminals in accordance with the control parameter including a transmission bit rate of a signal transmitted in the past. The relay device therefore makes it possible to reduce a load of the processing for detecting a transmission bit rate and generating control information.

The relay device according to the present embodiment is designed to set the control parameter in accordance with the level of a speech/audio signal reproduced and with communication conditions including the status of a line in the relay device according to the present embodiment. The relay device therefore makes it possible to achieve a layer configuration capable of reproduction of a sound comfortable on the side of a listener.

The relay device according to the present embodiment is designed to update the control parameter when the number of communication terminals participating in multi-party communications changes, thereby making it possible to reduce a load of the processing for generating control information.

The relay device according to the present embodiment is designed to select encoded information in accordance with the control information to combine the selected encoded information, thereby making it possible to reduce a load of the processing.

The relay device according to the present embodiment is designed to receive encoded information transmitted in the same time zone after receiving encoded information transmitted in the previous time zone, thereby making it possible to clarify the processing.

The relay device according to the present embodiment is designed to connect two communication terminals relating to an interrupt by use of a communication line other than the line used for multi-party communications. The relay device is therefore capable of performing the processing relating to the interrupt without a suspension of the multi-party communications.

The relay device according to the present embodiment is designed to connect two communication terminals relating to an interrupt by use of a communication line other than the line used for multi-party communications. The relay device is therefore capable of performing the processing relating to the interrupt without a suspension of the multi-party communications.

The method for processing a signal, according to the present embodiment, comprises the step of reconstructing received encoded information to transmit the reconstructed encoded information without decoding the encoded information. This suppresses an increase in cost necessary for the processing. The relay device therefore makes it possible to achieve a multi-party communication system capable of preventing a decoded speech/audio signal from being significantly deteriorated.

The operations of the relay device performing the signal processing for the multi-party communications are described above in the present embodiment. The present invention may be applied to the operations performed by a program for processing a signal, which causes a computer to execute the signal processing. The present invention may be also applied to the operations performed by using the program for processing a signal, which is written in a machine-readable storage medium such as a memory, disk, tape, CD, and DVD, thereby obtaining a similar effect to the present embodiment.

### (Second Embodiment)

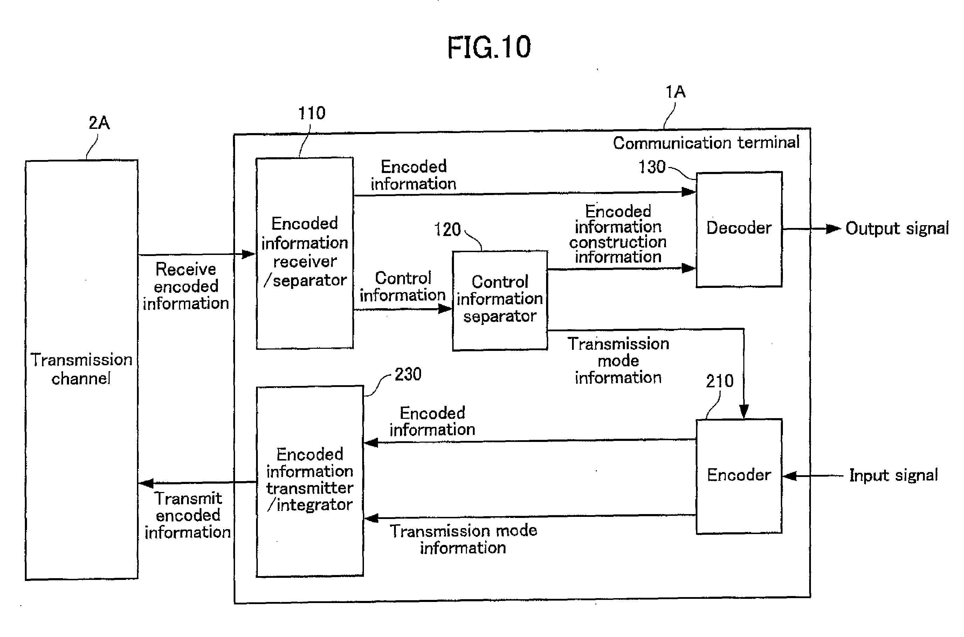

Fig. **10** is a block diagram showing the configuration of a communication terminal according to the second embodiment of the present invention. The communication terminal **1A** according to the second embodiment, as shown in Fig. **10****,** includes an encoded information receiver/separator **110,** a control information separator **120,** a decoder **130,** an encoder **210,** and an encoded information transmitter/integrator **230.** Each of communication terminals **1B** to **1N** has the same configuration as that of the communication terminal **1A.** The configuration of each of the communication terminals **1B** to **1N** is thus not described. Each of the processing blocks is described below in detail.

The encoded information receiver/separator **110** receives encoded information transmitted from the relay device **10** through the transmission channels **2A** to **2N** and **2Z**. The encoded information receiver/separator **110** then separates the received encoded information into encoded information (hereinafter referred to as a "reception encoded information") and control information and extracts the encoded information and the control information. The encoded information receiver/separator **110** then outputs the extracted reception encoded information to the decoder **130** and outputs the extracted control information to the control information separator **120.**

The control information separator **120** receives the control information from the encoded information receiver/separator **110** and analyzes the received control information. The control information separator **120** then separates the control information into encoded information configuration information and transmission mode information. The encoded information configuration information is designed to be used for decoding, while the transmission mode information is designed to be used for coding. The control information separator **120** then outputs the encoded information configuration information to the decoder **130** and outputs the transmission mode information to the encoder **210.** The encoded information configuration information indicates information on a layer configuration of the encoded information. The transmission mode information is predetermined information including a transmission bit rate. That is, the control information separator **120** is designed to output, to the decoder **130,** the encoded information configuration information included in the control information and output, to the encoder **210,** the transmission mode information included in the control information.

The decoder **130** receives the received encoded information from the encoded information receiver/separator **110** and receives the encoded information configuration information from the control information separator **120.** The decoder **130** decodes the encoded information in accordance with the received encoded information configuration information to obtain an output signal.

The encoder **210** receives an input signal such as a speech/audio signal and receives the transmission mode information from the control information separator **120.** The encoder **210** encodes the transmission mode information in accordance with the received input signal. The encoder **210** then generates transmission encoded information. The encoder **210** then outputs the generated encoded information and the transmission mode information to the encoded information transmitter/separator **230.**

The encoded information transmitter/separator **230** receives the encoded information and the transmission mode information from the encoder **210.** The encoded information transmitter/separator **230** integrates the encoded information and the transmission mode information to generate encoded information to be transmitted. The encoded information transmitter/separator **230** then outputs the generated encoded information to the relay device 10 through the transmission channels **2A** to **2N** and **2Z**.

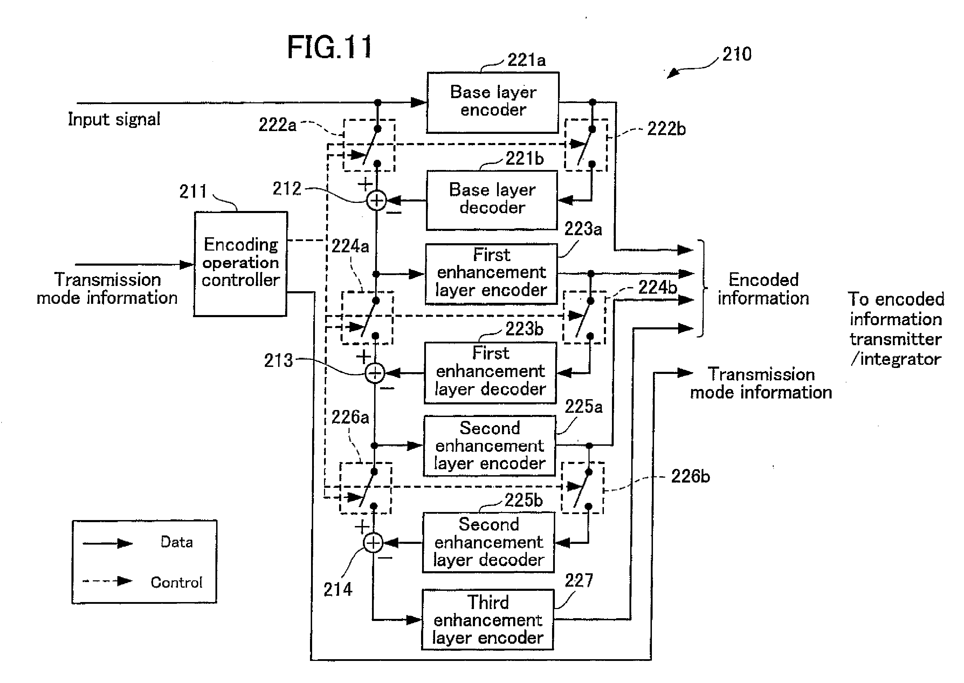

Fig. **11** is a block diagram showing the configuration of the encoder **210** according to the present embodiment. The encoder **210** partitions the input signal into pieces of data each including an N number of samples **(N** is a counting number) to encode each of the pieces of data including an N number of samples as a frame, the encoding being performed on a frame basis.

The encoder **210** has an encoding operation controller **211,** control switches **222a, 222b, 224a, 224b, 226a, 226b,** a base layer encoder 221A, a base layer decoder 221B, a first enhancement layer encoder **223a,** a first enhancement layer decoder **223b,** a second enhancement layer encoder **225a,** a second enhancement layer decoder **225b,** a third enhancement layer encoder **227,** and adders **212, 213, 214.**

The encoding operation controller **211** receives the transmission mode information. The encoding operation controller **211** controls the control switches **222a, 222b, 224a, 224b, 226a, 226b** to turn on or turn off in accordance with the received transmission mode information. The encoding operation controller **211** controls all the control switches **222a, 222b, 224a, 224b, 226a, 226b** to turn on when the transmission mode information indicates BR4.

The encoding operation controller **211** controls the control switches **222a, 222b, 224a, 224b** to turn on and the control switches **226a, 226b** to turn off when the transmission mode information indicates BR3. The encoding operation controller **211** controls the control switches **222a, 222b** to turn on and the control switches **224a, 224b, 226a, 226b** to turn off when the transmission mode information indicates BR2.

The encoding operation controller **211** controls all the control switches **222a, 222b, 224a, 224b, 226a, 226b** to turn off when the transmission mode information indicates BR1. The encoding operation controller **211** is designed to output the transmission mode information to the encoded information transmitter/integrator **230.** Since the encoding operation controller **211** controls the control switches **222a, 222b, 224a, 224b, 226a, 226b** to turn on or turn off in accordance with the received transmission mode information to determinate a combination of encoders used to encode the input signal.

The base layer encoder **221A** receives the input signal such as a speech/audio signal and encodes the input signal by using code-excited linear prediction (CELP) speech coding to generate a base layer encoded information. The base layer encoder **221A** then outputs the generated base layer encoded information to the encoded information transmitter/integrator **230** and the control switch **222b.** The configuration of the base layer encoder **221A** is described later.

The base layer decoder **221B** decodes the base layer encoded information output from the base layer encoder **221A** by using the CELP speech decoding to generate a decoded base layer signal when the control switch **222b** is ON. The base layer decoder **221B** then outputs the generated decoded base layer signal to the adder **212.** The base layer decoder **221B** does not operate when the control switch **222b** is OFF. The configuration of the base layer decoder **221B** is described later.

The adder **212** reverses the polarity of the decoded base layer signal and adds the reversed decoded base layer signal to the input signal to generate a first differential signal. The adder **212** then outputs the generated first differential signal to the first enhancement layer encoder **223a** and the control switch **224a.** The adder **212** does not operate when the control switches **222a** and **222b** are OFF.

The first enhancement layer encoder **223a** encodes the first differential signal generated by the adder **212** by using the CELP speech coding when the control switches **222a** and **222b** are ON to generate a first enhancement layer encoded information. The first enhancement layer encoder **223a** then outputs the generated first enhancement layer encoded information to the control switch **224b** and the encoded information transmitter/integrator **230.** The first enhancement layer encoder **223a** does not operate when the control switches **222a** and **222b** are OFF.

The first enhancement layer decoder **223b** decodes the first enhancement layer encoded information output from the first enhancement layer encoder **223a** by using the CELP speech decoding when the control switch **224b** is ON to generate a decoded first enhancement layer signal. The first enhancement layer decoder **223b** then outputs the generated decoded first enhancement layer signal to the adder **213.** The first enhancement layer decoder **223b** does not operate when the control switch **224b** is OFF.

The adder **213** reverses the polarity of the decoded first enhancement layer signal and adds the reversed decoded first enhancement layer signal to the first differential signal obtained from the control switch **224a** to generate a second differential signal. The adder **213** then outputs the generated second differential signal to the second enhancement layer encoder **225a.** The adder **213** does not operate when the control switches **224a** and **224b** are OFF.

The second enhancement layer encoder **225a** encodes the second differential signal output from the adder **213** by using the CELP speech coding when the control switches **224a** and **224b** are ON to generate a second enhancement layer encoded information. The second enhancement layer encoder **225a** then outputs the generated second enhancement layer encoded information to the encoded information transmitter/integrator **230.** The second enhancement layer encoder **225a** does not operate when the control switches **224a** and **224b** are OFF.

The second enhancement layer decoder **225b** decodes the second enhancement layer encoded information output from the second enhancement layer encoder **225a** by using the CELP speech decoding when the control switches **226a** and **226b** is ON to generate a decoded second enhancement layer signal. The second enhancement layer decoder **225b** then outputs the generated decoded second enhancement layer signal to the adder **214.** The second enhancement layer decoder 225b does not operate when the control switch **226b** is OFF.

The adder **214** reverses the polarity of the decoded second enhancement layer signal and adds the reversed decoded second enhancement layer signal to the second differential signal obtained from the control switch **226a** to generate a third differential signal. The adder **214** then outputs the generated third differential signal to the third enhancement layer encoder **227.** The adder **214** does not operate when the control switches **226a** and **226b** are OFF.

The third enhancement layer encoder **227** encodes the third differential signal output from the adder **214** by using the CELP speech coding when the control switches **226a** and **226b** are ON to generate encoded information (hereinafter referred to as a "third enhancement layer encoded information"). The third enhancement layer encoder **227** then outputs the generated third enhancement layer encoded information obtained by the coding to the encoded information transmitter/integrator **230.** The third enhancement layer encoder **227** does not operate when the control switches **226a** and **226b** are OFF.

The encoded information transmitter/integrator **230** integrates the encoded information output from the base layer encoder **221A,** the encoded information output from the first enhancement layer encoder **223a,** the encoded information output from the second enhancement layer encoder **225a,** the encoded information output from the third enhancement layer encoder **227,** and the transmission mode information output from the encoding operation controller **211** to generate encoded information. The encoded information transmitter/integrator **230** then outputs the generated encoded information to the transmission channel **2A.**

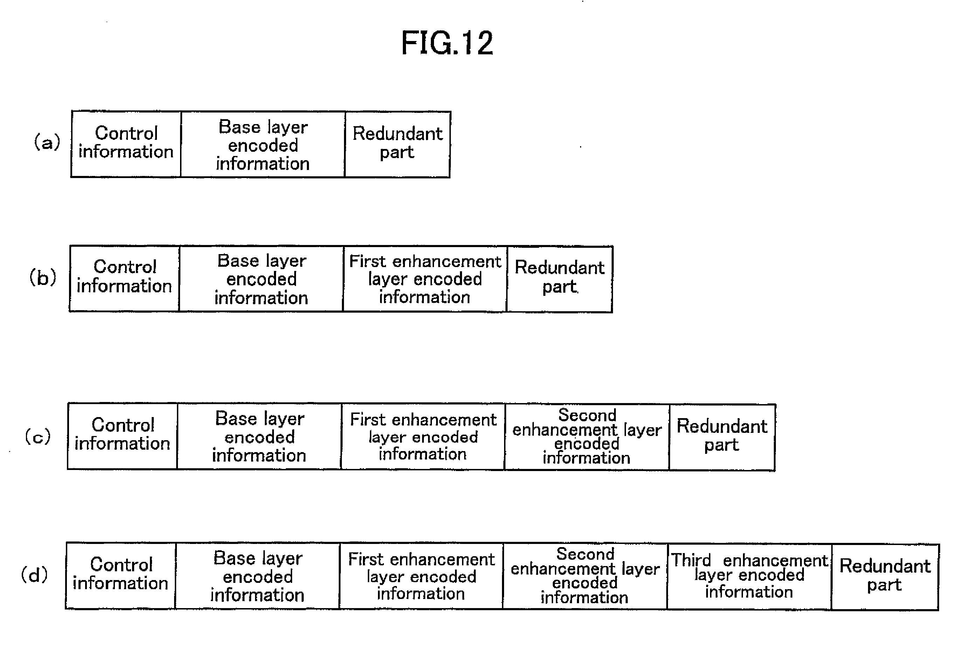

The data structure (bit stream) of the encoded information before transmission is next described with reference to Figs. **12(a)** to **12(d)**. When the transmission mode information indicates the transmission bit rate of BR1, the encoded information is composed of control information, a base layer encoded information, and a redundant part as shown in Fig. **12(a)**. When the transmission mode information indicates the transmission bit rate of BR2, the encoded information is composed of control information, a base layer encoded information, a first enhancement layer encoded information and a redundant part as shown in Fig. **12(b)**.

When the transmission mode information indicates the transmission bit rate of BR3, the encoded information is composed of control information, a base layer encoded information, a first enhancement layer encoded information, a second enhancement layer encoded information and a redundant part as shown in Fig. **12(c)**. When the transmission mode information indicates the transmission bit rate of BR4, the encoded information is composed of control information, a base layer encoded information, a first enhancement layer encoded information, a second enhancement layer encoded information, a third enhancement layer encoded information and a redundant part as shown in Fig. **12(d)**.

The redundant part included in each of the data structures shown in Figs. **12(a)** to **12(d)** is a redundant data storage segment included in the bit stream and is used for a counter and the like to synchronize a bit stream used to detect or correct a transmission error and a packet.

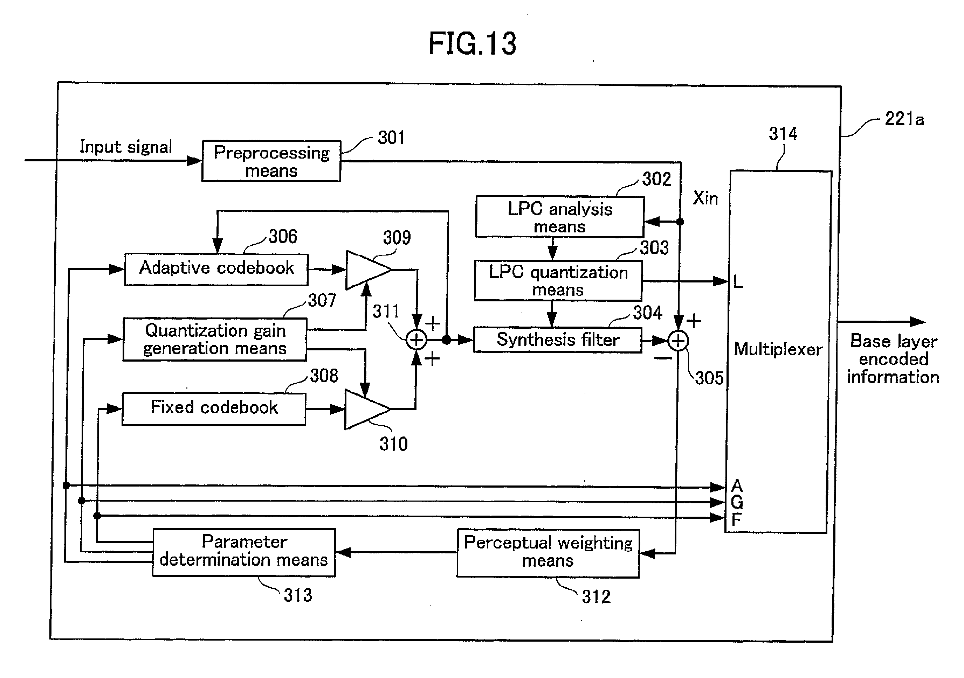

Fig. **13** is a block diagram showing the configuration of the base layer encoder **221A.** The base layer encoder **221A** encoding a speech/audio signal by using the CELP speech coding is described below.

The base layer encoder 221A includes preprocessing means **301,** LPC analysis means **302,** LPC quantization means **303,** a synthesis filter **304,** adders **305, 311,** an adaptive codebook **306,** quantization gain generating means **307,** a fixed codebook **308,** multipliers **309, 310,** perceptual weighting means **312,** parameter determination means **313,** and a multiplexer **314.**

The preprocessing means **301** receives an input signal that is not encoded. The preprocessing means **301** next executes processing such as high-pass filter processing for removing a direct current (DC) component from the input signal, waveform shaping processing for shaping the waveform of the input signal to improve the accuracy of the encoding executed later, and preemphasis processing. The preprocessing means **301** then outputs a signal Xin obtained by the processing to the LPC analysis means **302** and the adder **305.**

The LPC analysis means **302** receives the signal Xin output from the preprocessing means **301.** The LPC analysis means **302** next performs a linear prediction analysis on the signal Xin to generate a linear predictive coefficient. The LPC analysis means **302** then outputs the generated linear predictive coefficient to the LPC quantization means **303.**

The LPC quantization means **303** receives the linear predictive coefficient output from the LPC analysis means **302.** The LPC quantization means **303** next executes quantization processing for quantizing the linear predictive coefficient. The LPC quantization means **303** then outputs the quantized linear predictive coefficient to the synthesis filter **304.** The synthesis filter **304** outputs, to the multiplexer **314,** an L code indicating execution of synthesis filtering in accordance with the quantized linear predictive coefficient.

The synthesis filter **304** receives a signal output from the adder **311** and the linear prediction coefficient output from the LPC quantization means **303.** The synthesis filter **304** then determines a filter coefficient used for the synthesis filtering in accordance with the quantized linear prediction coefficient. The synthesis filter **304** performs the synthesis filtering on the signal output from the adder **311** to generate a synthesized signal. The synthesis filter **304** then outputs the synthesized signal to the adder **305.**

The adder **305** receives the signal Xin output from the preprocessing means **301** and the synthesized signal output from the synthesis filter **304.** The adder **305** then reverses the polarity of the synthesized signal and adds the reversed synthesized signal to the signal Xin to generate an error signal. The adder **305** then outputs the generated error signal to the perceptual weighting means **312.**

The adaptive codebook **306** receives an adaptive sound source vector code A output from the parameter determination means **313** described later. The adaptive codebook **306** extracts, as an adaptive sound source vector, a sample corresponding to a frame from a drive sound source (alignment) output in the past and specified in accordance with the adaptive sound source vector code A and outputs the extracted sample to the multiplier **309.** The drive source output from the adder **311** in the past is stored in a buffer of the adaptive codebook **306.**

The quantization gain generating means **307** receives a sound source gain code **G** output from the parameter determination means **313.** The quantization gain generating means **307** specifies a quantized adaptive sound source gain and a quantized fixed sound source gain in accordance with the received sound source gain code **G.** The quantization gain generating means **307** then outputs the specified quantized adaptive sound source gain and the specified quantized fixed sound source gain to the multipliers **309** and **310,** respectively. The quantized adaptive sound source gain is a gain for amplifying the adaptive sound source vector output from the adaptive codebook **306.** The quantized fixed sound source gain is a gain for amplifying a fixed sound source vector output from the fixed codebook **308.**

The fixed codebook **308** receives a fixed sound source vector code F output from the parameter determination **313** described later. The fixed codebook **308** then multiplies a diffusion vector by a pulse source vector having a shape specified in accordance with the received fixed sound source vector code F to generate a fixed sound source vector. The fixed codebook **308** then outputs the generated fixed sound source vector to the multiplier 310.

The multiplier **309** receives the adaptive sound source vector output from the adaptive codebook **306** and the quantized adaptive source gain output from the quantization gain generating means **307.** The multiplier **309** multiplies the adaptive sound source vector by the quantized adaptive sound source gain to outputs, to the adder **311,** a result obtained by multiplying the adaptive sound source vector by the quantized adaptive source gain. The multiplier **310** receives the fixed sound source vector output from the fixed codebook **308** and the quantized fixed sound source gain output from the quantization gain generating means **307.** The multiplier **310** multiplies the quantized fixed sound source gain by the fixed sound source vector to output, to the adder **311,** a result obtained by multiplying the quantized fixed sound source gain by the fixed sound source vector.

The adder **311** receives the adaptive sound source vector multiplied by the quantized adaptive sound source gain and output from the multiplier **309** and receives the fixed sound source vector output from the multiplier **310.** The adder **311** then adds the adaptive sound source vector to the fixed sound source vector to generate a drive sound source. The adder **311** then outputs the generated drive sound source to the synthesis filter **304** and the adaptive codebook **306.** The drive sound source input to the adaptive codebook **306** is stored in a buffer of the adaptive codebook **306.**

The perceptual weighting means **312** receives the error signal output from the adder **305.** The perceptual weighting means **312** then weights the error signal in consideration of human auditory sense to generate a coding distortion. The perceptual weighting means **312** then outputs the coding distortion to the parameter determination means **313.**

The parameter determination means **313** receives the coding distortion output from the perceptual weighting means **312.** The parameter determination means **313** next selects an adaptive sound source vector allowing the coding distortion to be minimized from data included in the adaptive codebook **306,** a fixed sound source vector allowing the coding distortion to be minimized from data included in the fixed codebook **308,** and a quantized gain allowing the coding distortion to be minimized from data included in the quantization gain generating means **307,** to generate an adaptive sound source vector code **A,** a fixed sound source vector code **F,** and a sound source gain code **G,** respectively. The parameter determination means **313** then outputs the selected adaptive sound source vector, the selected fixed sound source vector, and the selected quantized gain to the multiplexer **314.** The adaptive sound source vector code is information for specifying the adaptive sound source vector selected by the parameter determination means **313.** The fixed sound source vector code is information for specifying the fixed sound source vector selected by the parameter determination means **313.** The sound source gain code is information specifying the quantized adaptive sound source gain and the quantized fixed sound source gain.

The multiplexer **314** receives a code **L** indicative of the quantized linear predictive coefficient output from the LPC quantization means **303,** the adaptive sound source vector code **A,** the fixed sound source vector code **F,** and the codebook gain code **G,** which are output from the parameter determination means **313.** The multiplexer **314** multiplexes the code **L,** the adaptive sound source vector code **A,** and the codebook gain code **G** to generate and output a base layer encoded information.

The first enhancement layer encoder **223a,** the second enhancement layer encoder **225a,** and the third enhancement layer encoder **227** shown in Fig. **11** are the same in configuration as the base layer encoder **221A,** and description thereof is omitted. It should be noted that the signals input to the encoders **223a, 225a, 227** are different from the encoded information output from the encoders **223a, 225a, 227,** respectively.

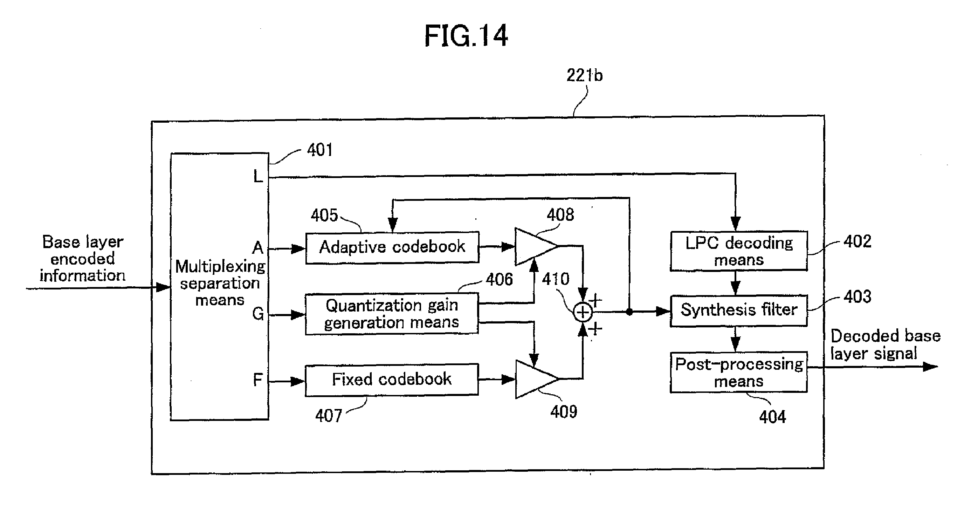

Fig. **14** is a block diagram showing the configuration of the base layer decoder 221B according to the present embodiment. The base layer decoder **221B** decoding a speech/audio signal by using CELP speech decoding is described below as an example.

As shown in Fig. **14****,** the base layer decoder **221B** has multiplexing/separation means **401,** LPC decoding means **402,** a synthesis filter **403,** post-processing means **404,** an adaptive codebook **405,** quantization gain generating means **406,** a fixed codebook **407,** multipliers **408, 409,** and an adder **410.**

The multiplexing/separation means **401** receives the base layer encoded information input to the base layer decoder **221B.** The multiplexing/separation means **401** next separates the base layer encoded information into codes **L, A, G, F.** The multiplexing/separation means **401** then outputs the codes **L, A, G,** and **F** to the LPC decoding means **402,** the adaptive codebook **405,** the quantization gain generating means **406,** and the fixed codebook **407,** respectively.

The LPC decoding means **402** receives the code **L** output from the multiplexing/separation means **401.** The LPC decoding means **402** next decodes the quantized linear predictive coefficient in accordance with the code **L.** The LPC decoding means **402** outputs the decoded quantized linear predictive coefficient to the synthesis filter 403.

The adaptive codebook **405** receives the code **A** output from the multiplexing/separation means **401.** The adaptive codebook **405** selects a sample corresponding to a frame of a drive sound source specified in the code **A** from a past drive sound source stored. The adaptive codebook **405** then outputs the selected sample as an adaptive sound source vector.

The quantization gain generating means **406** receives the codebook gain code **G** output from the multiplexing/separation means **401.** The quantization gain generating means **406** then decodes the quantized adaptive sound source gain and the quantized fixed sound source gain specified in the codebook gain code **G.** The quantization gain generating means **406** then outputs the adaptive sound source gain to the multiplier **408** and outputs the quantized fixed sound source gain to the multiplier **409.**

The fixed codebook **407** receives the code **F** output from the multiplexing/separation means **401.** The fixed codebook **407** then generates a fixed sound source vector specified in the code F and outputs the generated fixed sound source vector to the multiplier **409.**

The multiplier **408** receives the adaptive sound source vector output from the adaptive codebook **405** and the quantized adaptive sound source gain output from the quantization gain generating means **406.** The multiplier **408** multiplies the adaptive sound source vector by the quantized adaptive sound source gain to output the multiplied adaptive sound source vector to the adder **410.**

The multiplier **409** receives the fixed sound source vector output from the fixed codebook **407** and receives the quantized fixed sound source gain output from the quantization gain generating means **406.** The multiplier **409** then multiplies the fixed sound source vector by the quantized fixed sound source gain to output the multiplied fixed sound source vector to the adder **410.**

The adder **410** adds the gain-multiplied adaptive sound source vector output from the multiplier **408** to the gain-multiplied fixed sound source vector output from the multiplier **409** to generate a drive sound source. The adder **410** then outputs the generated drive sound source to the synthesis filter **403** and the adaptive codebook **405.**

The synthesis filter **403** receives the quantized linear predictive coefficient output from the LPC decoding means **402** and receives the drive sound source output from the adder **410.** The synthesis filter **403** determines a filter coefficient in accordance with the quantized linear predictive coefficient. The synthesis filter **403** performs synthesis filtering on the received drive sound source by use of the filter coefficient to output a signal obtained (synthesized) to the post-processing means **404.**

The post-processing means **404** receives the signal output from the synthesis filter **403.** The post-processing means **404** then executes processing on the received signal to improve the subjective sound quality and reduce stationary noise, the processing including formant emphasis processing and pitch emphasis processing. The post-processing means **404** then outputs the processed signal as a decoded base layer signal.

The first enhancement layer decoder **223b** and the second enhancement layer decoder **225b** as shown in Fig. **11** are the same in configuration as the base layer decoder **221B,** and the description thereof is omitted. It should be noted that the types of the signals input to the first enhancement layer decoder **223b** and to the second enhancement layer decoder **225b** are different from the types of decoded signals output from the first enhancement layer decoder **223b** and from the second enhancement layer decoder **225b,** respectively.

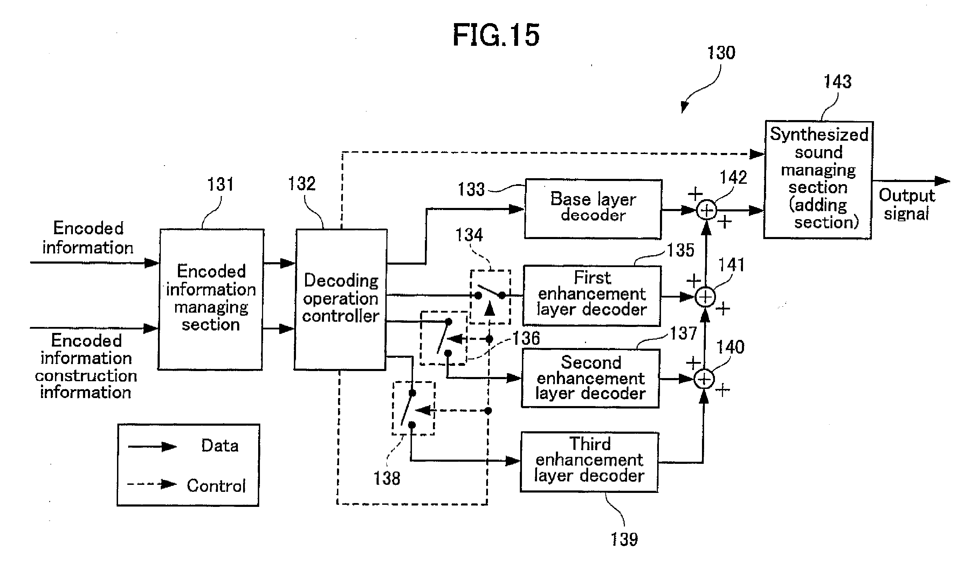

Fig. **15** is a block diagram showing the configuration of the decoder **130** according to the present embodiment. The decoder **130** decoding a speech/audio signal by using the CELP speech decoding is described below as an example.

The decoder **130** includes an encoded information managing section **131,** a decoding operation controller **132,** a base layer decoder **133,** a first enhancement layer decoder **135,** a second expansion decoder **137,** a third expansion decoder **139,** control switches **134, 136, 138,** adders **140** to **142,** and a synthesized sound managing section **143.**

The encoded information managing section **131** receives the encoded information output from the encoded information receiver/separator **110** and receives the encoded information configuration information output from the control information separator **120.** The encoded information managing section **131** causes the received encoded information and the control information to be stored in an internal memory provided in the encoded information managing section **131** until a predetermined amount of encoded information are received, in accordance with the received encoded information configuration information. Specifically, the encoded information managing section **131** causes the received encoded information to be stored in the internal memory until the predetermined amount of encoded information transmitted from all communication terminals **1A** to **1N** and the like participating in multi-party communications are received. When the encoded information managing section **131** receives the predetermined amount of encoded information, the encoded information managing section **131** outputs the encoded information and the encoded information configuration information stored in the internal memory to the decoding operation controller **132.**

The decoding operation controller **132** receives the encoded information and the encoded information configuration information from the encoded information managing section **131.** The decoding operation controller **132** controls the control switches **134, 136, 138** to cause the control switches **134, 136, 138** to turn on or off for each of the encoded information transmitted from the communication terminals **1A** to **1N** and the like, in accordance with the encoded information configuration information, to output a signal to a corresponding one of the base layer decoder **133,** the first enhancement layer decoder **135,** the second enhancement layer decoder **137,** and the third enhancement layer decoder **139.**

The decoding operation controller **132** refers to the number of the occupation layers (L1, L2, ...) indicated by the encoded information configuration information obtained by the encoded information managing section **131** for each of the communication terminals **1A** to **1N** and the like. When the number of the occupation layers is 1 (when the encoded information configuration information indicates that the number of the occupation layers is L1), the decoding operation controller **132** controls the control switches **134, 136, 138** to cause the control switches **134, 136, 138** to turn off and outputs, to the base layer decoder **133,** encoded information transmitted from the corresponding communication terminal. When the number of the occupation layers is 2 (when the encoded information configuration information indicates that the number of the occupation layers is L2), the decoding operation controller **132** controls the control switches **134, 136, 138** to cause the control switch **134** to turn on and to cause the control switches **136, 138** to turn off. The decoding operation controller **132** then outputs encoded information transmitted from the corresponding communication terminal to the base layer decoder **133** and the first enhancement layer decoder **135** in the order from the lower layer decoder. When the number of the occupation layers is 3 (when the encoded information configuration information indicates that the number of the occupation layers is L3), the decoding operation controller **132** controls the control switches **134, 136, 138** to cause the control switches **134, 136** to turn on and to cause the control switches **138** to turn off. Then, the decoding operation controller **132** outputs encoded information transmitted from the corresponding communication terminal to the base layer decoder **133,** the first enhancement layer decoder **135,** and the second enhancement layer decoder **137** in the order from the lowest layer decoder. When the number of the occupation layers is 4 (when the encoded information configuration information indicates that the number of the occupation layers is L4), the decoding operation controller **132** controls the control switches **134, 136, 138** to cause the control switches **134, 136, 138** to turn on. The decoding operation controller **132** then outputs encoded information transmitted from the corresponding communication terminal to the base layer decoder **133,** the first enhancement layer decoder **135,** the second enhancement layer decoder **137,** and the third enhancement layer decoder **139.**

The decoding operation controller **132** is designed to transmit a control signal to the synthesized sound managing section **143** to control an operation of the synthesized sound managing section **143** until all the encoded information transmitted from the communication terminals **1A** to **1N** and the like are decoded and stored in the internal memory.

The following description is made of an example in which the encoded information configuration information received by the decoding operation controller **132** of the communication terminal **1A** indicates "B:L2 (base, enh1) C:L2 (enh2, enh3)" under the condition that communications between three terminals (communication terminals **1A, 1B** and **1C**) are performed by using a scalable communications technique with four layers. In this case, the decoding operation controller **132** controls the control switches **134, 136, 138** to cause the control switch **134** to turn on and to cause the control switches **136, 138** to turn off. The decoding operation controller **132** then outputs the base layer encoded information that is encoded information transmitted from the communication terminal **1B** to the base layer decoder **133,** and outputs the first enhancement layer encoded information to the first enhancement layer decoder **135.** The decoding operation controller **132** also outputs a control signal to the synthesized sound managing section **143** to cause the synthesized sound managing section **143** to store a decoded signal transmitted from each of the communication terminals **1B** and **1C** and decoded by each of the base layer decoder **133** and the first enhancement layer decoder **135.** The decoding operation controller **132** next controls the control switches **134, 136, 138** to cause the control switch **134** to turn on and to cause the control switches **136, 138** to turn off. The decoding operation controller **132** then outputs the second enhancement layer encoded information that is encoded information transmitted from the communication terminal **1C** to the base layer decoder **133,** and outputs the third enhancement layer encoded information to the first enhancement layer decoder **135.**

The base layer decoder **133** decodes an encoded information such as the base layer encoded information output from the decoding operation controller **132** by using the CELP speech decoding, and outputs, to the adder **142,** a decoded signal (hereinafter referred to as a "decoded base layer signal") obtained by decoding the encoded information.

The first enhancement layer decoder **135** decodes an encoded information such as the first enhancement layer encoded information output from the decoding operation controller **132** by using the CELP speech decoding, and then outputs a decoded signal (hereinafter, referred to as a "decoded first enhancement layer signal") obtained by decoding the encoded information to the adder **141,** when the control switch **134** is ON. The first enhancement layer decoder **135** does not operate when the control switch **134** is OFF.

The second enhancement layer decoder **137** decodes an encoded information such as the second enhancement layer encoded information output from the decoding operation controller **132** by using the CELP speech decoding, and then outputs a decoded signal (hereinafter, referred to as a "decoded second enhancement layer signal") obtained by decoding the encoded information to the adder **140,** when the control switch **136** is ON. The second enhancement layer decoder **137** does not operate when the control switch **136** is OFF.

The third enhancement layer decoder **139** decodes encoded information such as the third enhancement layer encoded information output from the decoding operation controller **132** by using the CELP speech decoding, and then outputs a decoded signal (hereinafter, referred to as a "decoded third enhancement layer signal") obtained by decoding the encoded information to the adder **140,** when the control switch **138** is ON. The third enhancement layer decoder **139** does not operate when the control switch **138** is OFF.

The adder **140** adds the decoded third enhancement layer signal output from the third enhancement layer decoder **139** to the decoded second enhancement layer signal output from the second enhancement layer decoder **137** to output a signal obtained by adding the decoded third enhancement layer signal to the decoded second enhancement layer signal to the adder **141,** when the control switches **136, 138** are ON. The adder **140** outputs the decoded second enhancement layer output from the second enhancement layer decoder **137** to the adder **141** when the control switch **136** is ON and the control switch **138** is OFF. The adder **140** does not operate when the control switches **136, 138** are OFF.

The adder **141** adds the decoded second enhancement layer signal output from the second enhancement layer decoder **137** to the decoded first enhancement layer signal output from the first enhancement layer decoder **135** to output, to the adder **142,** a signal obtained by adding the decoded second enhancement layer signal to the decoded first enhancement layer signal, when the control switches **134, 136** are ON. The adder **141** outputs the decoded first enhancement layer output from the first enhancement layer decoder **135** to the adder **142** when the control switch **136** is OFF and the control switch **134** is ON. The adder **141** does not operate when the control switches **134, 136** are OFF.

The adder **142** adds the decoded signal output from the adder **141** to the decoded base layer signal output from the base layer decoder **133** to output a signal obtained by the addition to the synthesized sound managing section **143** when the control switch **134** is ON. The adder **142** outputs the decoded base layer signal received from the base layer decoder **133** to the synthesized sound managing section **143** when the control switch **134** is OFF.

The synthesized sound managing section **143** receives the decoded signal output from the adder **142** and stores the received decoded signal in an internal memory provided in the synthesized sound managing section **143** in accordance with control of the decoding operation controller **132.** The synthesized sound managing section **143** overlaps and adds multiple decoded signals stored in the internal memory to output a signal obtained by the addition as an output signal.

The synthesized sound managing section **143** receives, from the decoding operation controller **132,** a signal that indicates the number of communication terminals and constitutes encoded information transmitted from the controller (relay device) as a control signal. The synthesized sound managing section **143** causes the decoded signals corresponding to the number of the communication terminals to be stored in the internal memory. The synthesized sound managing section **143** then overlaps and adds all the decoded signals stored in the internal memory to output a signal obtained by the addition.

The base layer decoder **133,** the first enhancement layer decoder **135,** the second enhancement layer decoder **137,** and the third enhancement layer decoder **139** are the same in configuration as the base layer decoder **221B** described above. The base layer decoder **133,** the first enhancement layer decoder **135,** the second enhancement layer decoder **137,** and the third enhancement layer decoder **139** are different from the base layer decoder 221B only in the type of an encoded information to be input and in the type of a signal to be output. Thus, the configurations of the base layer decoder **133,** the first enhancement layer decoder **135,** the second enhancement layer decoder **137,** and the third enhancement layer decoder **139** are not described.

The communication terminal according to the present embodiment is designed to reconstruct received encoded information and transmit the reconstructed encoded information without decoding the encoded information, as described above. This prevents an increase in cost necessary for processing, compared with the conventional communication terminal, communication method and the like. The communication terminal makes it possible to achieve a multi-party communication system capable of suppressing a deterioration of the quality of a sound obtained by decoding a signal.

The communication terminal according to the present embodiment is designed to decode information encoded in each of the layers in accordance with the control information. The communication terminal is capable of decoding encoded information transmitted from a different communication terminal and integrated in a different layer.

In addition, the communication terminal is capable of decoding the encoded information under the condition that the transmission bit rate is decreased since the communication terminal is designed to decode the information encoded in each of the layers.

The communication terminal having the configuration with the four layers is described above to easily understand the above embodiments. The present invention, however, is not limited to the configuration with the four layers. The number of the layers is not limited as long as a residual signal representing a difference between an input signal and an output signal of a lower layer is encoded in a higher layer in a coding or decoding method using hierarchical layers.

According to the present invention, the number of communication terminals capable of performing simultaneous multi-party communications is not limited. The present invention may be applied to multi-party communications between communication terminals, the number of which is more than the number of layers in which a scalable coding technique is used, by combining with a technique for decoding encoded information transmitted from each of the communication terminals, the number of which is more than the number of the layers, overlapping the decoded encoded information and a decoded signal obtained by decoding encoded information transmitted from another one of the communication terminals, and encoding a signal obtained by the overlapping.

In the above description, the layers are evenly assigned to communication terminals **1A** to **1N** and the like to easily understand the present embodiment. The present invention, however, is not limited to the above-described method of the assignments of the layers to the communication terminals **1A** to **1N** and the like. The present invention may be applied to a method for assigning a layer to a terminal based on a condition, such as a method for preferentially assigning a layer to a communication terminal transmitting a high level of a speech/audio signal and a method for preferentially assigning a layer to a communication terminal connected to the relay device through a line in good condition, which results in flexible multi-party communications.

In the description above, each of the communication terminals **1A** to **1N** and the like is designed to transmit a request for releasing a line connection when participating in multi-party communications and canceling the participation of the multi-party communications, especially when canceling the participation of multi-party communications. The present invention, however, is not limited to the above description. Each of the communication terminals **1A** to **1N** and the like may forcibly cause another one of the communication terminals **1A** to **1N** and the like to cancel the participation of the multi-party communications.

### Industrial Applicability

The relay device, the communication terminal, the signal decoder, the method for processing a signal, and the program for processing a signal, according to the present invention, make it possible to achieve a multi-party communication system capable of preventing a deterioration of the quality of a decoded sound signal, without an increase in cost necessary for the processing. The relay device, the communication terminal, the signal decoder, the method for processing a signal, and the program for processing a signal, according to the present invention, are useful for multi-party communications.

## Claims

1. A relay device comprising:
a receiver for receiving encoded information transmitted from a plurality of communication terminals participating in multi-party communications and encoded on a layer basis in a plurality of layers by scalable coding;
a reconstruction processor for generating control information used to combine, on a layer basis, said encoded information received by said receiver; and
an integrator/transmitter for integrating, on a layer basis, said encoded information received by said receiver from said plurality of communication terminals, in accordance with said control information generated by said reconstruction processor.

2. A relay device as set forth in claim 1, wherein
said reconstruction processor has a control parameter storage section for storing a control parameter set for each of said plurality of communication terminals participating in said multi-party communications, said control parameter including a transmission bit rate of a signal transmitted in the past, and
said reconstruction processor generates said control information used to combine said encoded information to be transmitted to said plurality of communication terminals, in accordance with said control parameter stored in said control parameter storage section.

3. A relay device as set forth in claim 2, wherein
said reconstruction processor sets said control parameter stored in said control parameter storage section in accordance with a level of a speech/audio signal to be reproduced based on said encoded information transmitted from said plurality of communication terminals and with information relating to a communication condition including a status of a line used to communicate said relay device with said plurality of communication terminals.

4. A relay device as set forth in claim 2, wherein
said reconstruction processor updates said control parameter stored in said control parameter storage section when a communication terminal other than said plurality of communication terminals participates in said multi-party communications or when any of said plurality of communication terminals participating in said multi-party communications cancel the participation of said multi-party communications.

5. A relay device as set forth in claim 2, wherein
said reconstruction processor selects said encoded information encoded on a layer basis in a predetermined number of layers including a base layer from said encoded information received from the plurality of communication terminals in accordance with said control parameter stored in said control parameter and combine the selected encoded information.

6. A relay device as set forth in claim 2, wherein
each of said plurality of communication terminals includes an encoded information storage section for sequentially storing said encoded information transmitted by each of said plurality of communication terminals in each of time zones, and
said encoded information storage section outputs, to said reconstruction processor, said encoded information sequentially stored in said encoded information storage section and not output to the reconstruction processor when said encoded information storage section receives said encoded information transmitted in the same time zone from any two or more of said plurality of communication terminals participating in said multi-party communications.

7. A relay device as set forth in claim 1, wherein
any one of said plurality of communication terminals, which attempts to cause a communication terminal other than said plurality of communication terminals to participate in said multi-party communications, is connected to said communication terminal other than said plurality of communication terminals through a line other than a line used for said multi-party communications to cause said communication terminal other than said plurality of communication terminals to participate in said multi-party communications.

8. A relay device as set forth in claim 1, wherein
any one of said plurality of communication terminals participating in said multi-party communications is connected to a communication terminal other than said plurality of communication terminals through a line other than a line used for said multi-party communications to communicate said any one of said plurality of communication terminals with said communication terminal other than said plurality of communication terminals.

9. A communication terminal comprising:
a receiver for receiving information encoded on a layer basis in a plurality of layers by scalable coding;
a decoder for decoding a speech/audio signal by scalable decoding in accordance with control information included in said encoded information received by said receiver;
an encoder for encoding a speech/audio signal by scalable coding in accordance with said control information included in said encoded information received by said receiver; and
a transmitter for transmitting said encoded information obtained by encoding said speech/audio signal by said encoder.

10. A signal processor comprising:
an encoded information separator for separating information encoded on a layer basis in a plurality of layers by scalable coding into an encoded information of each layer and control information; and
a decoder for decoding said encoded information on a layer basis in accordance with said control information.

11. A signal processor as set forth in claim 10, wherein
said decoder decodes said information encoded on a layer basis in a predetermined number of layers including a base layer.

12. A method for processing a signal, said method comprising:
a receiving step of receiving encoded information transmitted from a plurality of communication terminals participating in multi-party communications and encoded on a layer basis in a plurality of layers by scalable coding by use of a receiver;
a reconstruction step of generating control information used to combine, on a layer basis, said encoded information received from said plurality of communication terminals in said receiving step, by using a reconstruction processor;
an integration step of combining and integrating said encoded information on a layer basis by using an integrator/transmitter; and
a transmission step of transmitting said information encoded on a layer basis in said plurality of layers and integrated in said integration step by using said integrator/transmitter.

13. A program for processing a signal which causes a computer to execute:
a receiving step of receiving encoded information transmitted from a plurality of communication terminals participating in multi-party communications and encoded on a layer basis in a plurality of layers by scalable coding;
a reconstruction step of generating control information used to combine, on a layer basis, said encoded information received from said plurality of communication terminals in said receiving step;
an integration step of combining and integrating, on a layer basis, said encoded information received from said plurality of communication terminals in said receiving step and encoded on a layer basis in said plurality of layers; and
a transmission step of transmitting information encoded on a layer basis and in said plurality of layers and integrated in said integration step.
